(19) Europäisches Patentamt
European Patent Office
Office européen des brevets

(11) **EP 2 087 585 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(21) Anmeldenummer: **07819380.2**

(22) Anmeldetag: **19.10.2007**

(51) Int Cl.:
***H02P 21/00*** *(2006.01)*

(86) Internationale Anmeldenummer:
**PCT/EP2007/009337**

(87) Internationale Veröffentlichungsnummer:
**WO 2008/052714 (08.05.2008 Gazette 2008/19)**

(54) **STEUERUNG UND/ODER REGELUNG EINES 3-PHASEN-STROMRICHTERS FÜR DEN BETRIEB EINER ASYNCHRONMASCHINE**

OPEN-LOOP AND/OR CLOSED-LOOP CONTROL OF A 3-PHASE POWER CONVERTER FOR THE OPERATION OF AN ASYNCHRONOUS MACHINE

DISPOSITIF DE COMMANDE ET/OU DE RÉGULATION D'UN CONVERTISSEUR TRIPHASÉ POUR LE FONCTIONNEMENT D'UNE MACHINE ASYNCHRONE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.10.2006 DE 102006052042**

(43) Veröffentlichungstag der Anmeldung:
**12.08.2009 Patentblatt 2009/33**

(73) Patentinhaber: **Bombardier Transportation GmbH 10785 Berlin (DE)**

(72) Erfinder:
 • **BECKER, Robert**
  **76684 Östringen (DE)**
 • **KRAFKA, Peter**
  **69198 Schriesheim (DE)**
 • **RAMPE, Michael**
  **69469 Weinheim-Hohensachsen (DE)**

(74) Vertreter: **Patentanwälte Bressel und Partner Radickestrasse 48 12489 Berlin (DE)**

(56) Entgegenhaltungen:
 • **GRIVA, G.; PROFUMO, F.; ABRATE, M.; TENCONI, A.; BERRUTI, D.: "Wide speed range DTC drive performance with new flux weakening control" POWER ELECTRONICS SPECIALISTS CONFERENCE, PESC 1998 RECORD, Bd. 2, 17. Mai 1998 (1998-05-17), - 22. Mai 1998 (1998-05-22) Seiten 1599-1604, XP002467493**
 • **TRIPATHI, A.; KHAMBADKONE, A.M.; PANDA, S.K.: "Dynamic torque control performance of the Direct Flux Control scheme in field weakening range" THE 29TH ANNUAL CONFERENCE OF THE IEEE INDUSTRIAL ELECTRONICS SOCIETY, 2003. IECON '03, Bd. 1, 2. September 2003 (2003-09-02), - 6. September 2003 (2003-09-06) Seiten 220-225, XP002467494**
 • **JOONG-HUI LEE; CHANG-GYUN KIM; MYUNG-JOONG YOUN: "A dead-beat type digital controller for the direct torque control of an induction motor" IEEE TRANSACTIONS ON POWER ELECTRONICS, Bd. 17, Nr. 5, September 2002 (2002-09), Seiten 739-746, XP002467495**

## Beschreibung

Die Erfindung betrifft eine Steuer- und/oder Regeleinrichtung,für einen 3-Phasen-Stromrichter, der eine Asynchronmaschine speist. Die Erfindung betrifft außerdem ein entsprechendes Steuer- und/oder Regelverfahren. Spezieller betrifft die Erfindung insbesondere die gesteuerte und/oder geregelte Einprägung eines Drehmomentsollwertes und eines Ständerflusssollwertes für eine stromrichtergespeiste Drehstromasynchronmaschine. Die Erfindung soll insbesondere bei Hochleistungsanwendungen eingesetzt werden, wie bspw. Traktionsstromrichter für die Versorgung von Antriebsmotoren von Schienenfahrzeugen.

Kennzeichnend für derartige Antriebssysteme ist der Einsatz von Drehstromasynchronmaschinen in Verbindung mit dreiphasigen Pulswechselrichtem und eingeprägter Zwischenkreisspannung. Diese Antriebssysteme werden wegen der geforderten hohen Leistungsdichte und Effizienzanforderung mit vergleichsweise niedriger Schaltfrequenz betrieben. Beispielsweise liegt die Schaltfrequenz im Spannungsstellbereich nur im Bereich von 300 Hz bis 800 Hz bei Lokomotiven für Femzüge, bei Triebwagen und schweren Nahverkehrszügen. Im leichten Nahverkehr liegt sie typischerweise im Bereich von 800 Hz bis 3 kHz. Die verfügbare Zwischenkreisspannung muss optimal ausgenutzt werden, d.h. die eingesetzte Steuer- und/oder Regelungsstruktur muss einen Betrieb im Feldschwächbereich ohne regelungstechnisch geforderte Spannungsstellreserve ermöglichen. Darüber hinaus ist es erforderlich zur Vermeidung von unzulässigen Netzrückwirkungen ein stationär definiertes und beeinflussbares Oberschwingungsspektrum zu erzeugen. Dies erfordert zusammen mit der vergleichsweise niedrigen Schaltfrequenz und maximalen Ausgangsspannung des Stromrichters den Einsatz von synchronen Pulsverfahren.

Die Anforderungen an die Regelungsdynamik von stromrichtergespeisten Traktionsantrieben sind ebenfalls vergleichsweise hoch. Üblicherweise werden bei derartigen regelungstechnischen Anforderungen an ein Antriebssystem im unteren und mittleren Leistungsbereich Stromrichter mit vergleichsweise hoher Schaltfrequenz (5 kHz bis 20 kHz) in Verbindung mit einem klassischen feldorientierten Regelverfahren eingesetzt.

Für Traktionsanwendungen insbesondere für den direkten Betrieb am Gleichspannungsfahrdraht ohne Eingangssteller ist ein gutes Störverhalten der Regelung gegenüber Fahrleitungsspannungssprüngen wichtig. Die Beherrschung von Gleit- und Schleudervorgängen, sowie die Dämpfung von mechanischen Antriebsschwingungen sowie der stabile Betrieb an einem schwingungsfähigen LC-Eingangsfilter erfordern ein gutes und gegenüber stationären Antrieben gleicher Leistungsklasse hochdynamisches Führungsverhalten der indirekten Drehmomenteinprägung.

Darüber hinaus muss das Regel- und/oder Steuerverfahren zum Schutz des Stromrichters und/oder Motors eine projektierbare maximale Strombelastung gewährleisten und das Kippen der angeschlossenen Drehstromasynchronmaschine bzw. einzelner Maschinen innerhalb eines Gruppenantriebes sicher verhindern. Dies gilt auch bzw. insbesondere bei Stör- und Führungsgrößenänderungen aus den zuvor bereits genannten Gründen.

Verfahren, die insbesondere für den Einsatz unter den genannten Randbedingungen geeignet erscheinen, sind bekannt. Den bekannten Verfahren gemeinsam ist die Unterteilung des jeweiligen Steuer- und/oder Regelverfahrens in die wesentlichen Funktionen Messwerterfassung, Flussmodell, Regelstruktur und Steuersatz (für die Pulsgenerierung), wobei sich insbesondere die Regelstruktur und der Steuersatz bei den einzelnen genannten Verfahren unterscheiden. Üblicherweise werden die genannten Funktionen teilweise oder komplett innerhalb eines Signalprozessorsystems und teilweise mit direkter FPGA (Field Programmable Gate Array)-Unterstützung realisiert.

Im Allgemeinen werden für die genannten Antriebsregelungen die folgenden analogen Messgrößen erfasst:

- mindestens zwei der drei Wechselrichterphasenströme (Maschinenstrom oder Summe der einzelnen Maschinenströme bei Gruppenantrieben mit parallel geschalteten Maschinen) und
- die Zwischenkreisspannung des Pulswechselrichters.
- In einer möglichen Variante können zusätzlich auch zwei Leiterspannungen des Wechselrichterausgangs gemessen werden.
- Optional können die einzelnen Motortemperaturen zusätzlich erfasst und u. a. zur Nachführung der temperaturabhängigen Widerstandsparameter der Maschinen verwendet werden.
- Als weitere Messgröße kann optional die Motordrehzahl erfasst werden.
- Speist ein Wechselrichter zwei oder mehr parallel geschaltete Fahrmotoren, so werden vorzugsweise die einzelnen Motordrehzahlen erfasst und für die Regelung z. B. der arithmetische Mittelwert benutzt.

Grundlage der bekannten feldorientierten Regelverfahren ist die Kenntnis des Betrages und der Winkellage des Rotorflusses bei rotorflussorientierten Verfahren und/oder des Ständerflusses bei ständerflussbasierten Verfahren. Da jedoch die Flussverkettungen sowie das Drehmoment der Maschine nicht direkt messbar sind, werden im allgemeinen Rechenmodelle (Flussmodelle) eingesetzt, welche die innere Struktur der Asynchronmaschine nachbilden.

Zur Bestimmung des Flusses aus den gemessenen bzw. über geeignete Berechungen nachgebildeten Istwerten Maschinenklemmenspannung, Maschinenphasenstrom und Drehzahl dient insbesondere ein Flussmodell. Es ist üblicher Weise aus zwei bekannten Teilmodellen der Asynchronmaschine zusammengesetzt, nämlich dem so genannten Spannungsmodell und dem so genannten Strommodell. Bei kleineren Drehzahlen überwiegt der Einfluss des Strommodells, während bei größeren Drehzahlen dagegen der Einfluss des Spannungsmodells überwiegt. Die Kombination der beiden Teilmodelle vereinigt deren Vorteile und kann als ein vom Strommodell geführtes Spannungsmodell aufgefasst werden.

Bei dem in Stanke, G., Horstmann, D.: "Die stromrichtemahe Antriebsregelung des Steuergerätes für Bahnautomatisierungssysteme SIBAS32", eb-Elektrische Bahnen, Band 90 (1992), Heft 11, Seite 344-350, beschriebenen Verfahren handelt es sich um ein mittelwertbasiertes, rotorflussorientiertes Regelverfahren mit asynchronen und synchronen Pulsungen zur Ansteuerung des Stromrichters. Neben den Vorteilen insbesondere der synchronen Pulsungen und der indirekten Zweikomponentenstromregelung (s. o.) weist dieses Verfahren gegenüber anderen Nachteile hinsichtlich der erreichbaren Regeldynamik und im Störverhalten insbesondere bei Änderung der Zwischenkreisspannung auf.

Das in Depenbrock, M.: "Direkte Selbstregelung (DSR) für hochdynamische Drehfeldantriebe mit Stromrichterspeisung", etzArchiv, Band 7 (1985) Heft 7, Seite 211-218 bzw. in Jänecke, M., Kremer, R., Steuerwald, G.: "Direkte Selbstregelung, ein neuartiges Regelverfahren für Traktionsantriebe im Ersteinsatz bei dieselelektrischen Lokomotiven", eb-Elektrische Bahnen, Band 89 (1991), Heft 3, Seite 79-87 beschriebene Verfahren DSR ist ein speziell für Traktionsantriebe geeignetes, augenblickswertbasiertes Verfahren, welches insbesondere ein optimales dynamisches Verhalten zeigt, jedoch kein reproduzierbares stationäres Verhalten. Außerdem erlaubt die DSR keine sehr kleinen Verhältnisse von Schaltfrequenz zu Grundfrequenz. Darüber hinaus ist u. a. aufgrund der Mindesteinschaltdauer des Stromrichters ein Betrieb bei kleinen Drehzahlen problematisch, was durch Umschaltung auf ein alternatives, ebenfalls ständerflussbasiertes Regelverfahren ISR (s. die genannte Veröffentlichung von Jänecke, M et al.) gelöst wird.

Auch das in "Direkte Drehmomentregelung von Drehstromantrieben" ABB Technik, Nr 3, (1995), Seite 19-24, beschriebene Verfahren DTC liefert als augenblickswertbasiertes Verfahren ein optimales dynamisches Verhalten wie die direkte Selbstregelung (DSR). Jedoch ist das stationäre Verhalten ebenfalls nicht reproduzierbar und diese direkte Drehmomentregelung erlaubt auch keine sehr kleinen Verhältnisse von Schaltfrequenz zu Grundfrequenz. Im Gegensatz zur DSR wird bei der DTC die Ständerflusstrajektorie auf einer Kreisbahn geführt, was u. a. eine deutlich höhere Schaltfrequenz des Stromrichters erfordert.

Bei den in WO 2005/018086 A1, in Amler, G.; Hoffmann, F.; Stanke, G.; Sperr, F.; Weidauer, M.: "Highly dynamic and speed sensorless control of traction drives", Proc. EPE Conference 2003, Toulouse, in Evers, C.; Hoffmann, F.; Steimel, A.; Wörner, K.: "Flux-guided control strategy for pulse pattern changes without transients of torque and current for high power IGBT-inverter drives", Proc. EPE Conference 2001, Graz und in Wömer, K.: "Quasi-synchrone statorflussgeführte Pulsverfahren für die wechselrichtergespeiste Induktionsmaschine", Dissertation 2001, VDI-Fortschrittsberichte, Reihe 21, Nr. 302, beschriebenen Verfahren werden insbesondere die o. g. Nachteile wie schlechtere Regeldynamik und schlechteres Störverhalten bei vergleichsweise niedrigen Schaltfrequenzen der mittelwertbasierten Regelverfahren mit nachgeschaltetem Pulsmustergenerator durch eine augenblickswertbasierte, ständerflussgeführte Pulsgenerierung beseitigt.

Griva, G.; Profumo, F.; Abrate, M; Tenconi, A.; Berruti, D.: "Wide speed range DTC drive performance with new flux weakening control", Power Electronics Specialists Conference, PESC 1998 Record, Bd. 2, 17. Mai 1998 (1998-05-17), - 22. Mai 2998 (1998-05-22) Seiten 1599-1604, XP002467493, beschreibt ein Feldschwächungsverfahren für Induktionsmotoren, wobei ein DTC (Direct Torque Control) Schema angewendet wird. Bei dem DTC Schema werden der Ständerfluss und das Drehmoment geregelt. Schaltpulse für die Wechselrichter-Schalter werden durch die Raumvektor-PWM-Methode erhalten. Gemäß D1 werden das Drehmoment und der Ständerfluss Dead-Beat geregelt.

Tripathi, A.; Khambadkone, A. M.; Panda, S. K.: "Dynamic torque control performance of the Direct Flux Control scheme in field weakening range", The 29th annual conference of the IEEE Industrial Electronics Society, 2003. IECON '03, Bd. 1, 2. September 2003 (2003-09-02), - 6. September 2003 (2003-09-06) Seiten 220-225, XP002467494 beschreibt das dynamische und stationäre Verhalten einer Drehmomentsteuerung im Feldschwächbereich für ein DFC (Direct Flux Control) Schema, das eine ständerflussvektorbasierte Raumvektormodulation verwendet. Dabei wird in einer äußeren Schleife ein Sollwert der Ständerfrequenz als Ergebnis einer Verknüpfung der Ausgangsgröße eines Drehmomentreglers und eines Istwertes für eine innere Schleife bereitgestellt. Die innere Schleife weist eine schätzende Ständerfluss-Steuerung mit Dead-Beat Verhalten und mit einer Raumvektormodulation basierend auf einem Ständerfluss-Fehlervektor auf.

Joong-Hui Lee; Chang-Gyun Kim; Myung-Joong Youn: "A dead-beat type digital controller for the direct torque control of an induction motor" IEEE Transactions on Power Electronics, Bd. 17, Nr. 5, September 2002 (2002-09) Seiten 739-746, XP002467495 beschreibt die Einführung einer Dead-Beat Steuerung für eine konventionelle direkte Drehmoment-Steuerung. Eine Regelungsstruktur wird nicht beschrieben.

Es ist eine Aufgabe der vorliegenden Erfindung, eine Steuer- und/oder Regeleinrichtung der anfangs genannten Art für einen 3-Phasen-Stromrichter anzugeben, die eine mittelwertbasierte Pulsmustergenerierung zur Ansteuerung des Stromrichters ermöglicht, wobei die genannten hohen dynamischen Anforderungen, insbesondere für Traktionsanwendungen bei Schienenfahrzeugen, unter optimaler Ausnutzung der zur Verfügung stehenden Eingangsspannung des Stromrichters erfüllt werden sollen. Darüber hinaus soll auch bei niedrigen Schaltfrequenzen ein stationär definiertes und beeinflussbares Oberschwingungsspektrum erzeugt werden können.

Es ist eine weitere Aufgabe der vorliegenden Erfindung, eine derartige Steuer- und/oder Regeleinrichtung anzugeben, die in einer weitestgehend einheitlichen Steuer- und/oder Regelstruktur sowohl eine mittelwertbasierte Pulsmustergenerierung als auch eine augenblickswertbasierte Pulsmustergenerierung zur Ansteuerung des Stromrichters ermöglicht.

Es ist noch eine weitere Aufgabe der vorliegenden Erfindung, entsprechende Steuer- und/oder Regelverfahren zum Betreiben einer Asynchronmaschine, die von einem 3-Phasen-Stromrichter gespeist wird, anzugeben.

Diese Aufgaben werden durch die Merkmale der Ansprüche 1 und 8 gelöst. Vorteilhafte Ausgestaltungen sind Gegenstand der auf diese rückbezogene Unteransprüche.

Es wird eine Steuer- und/oder Regeleinrichtung mit einer Steuer- und/oder Regelstruktur vorgeschlagen, die einen Ständerflussregler aufweist und die einen Pulsmustergenerator zumindest zur Erzeugung von mittelwert-basierten Pulssignalen aufweist. Der Ständerflussregler erzeugt abhängig von einer Eingangsgröße, die insbesondere von einem vorgeschalteten Schlupffrequenzregler erzeugt wird, sowie abhängig von weiteren Eingangssignalen die Pulssignale. Der Ständerflussregler des Pulsmustergenerators ist ausgestaltet, die Stellgröße abhängig von einem Sollwert des Ständerflusses der Asynchronmaschine und abhängig von einem Sollwert des Drehmoments der Asynchronmaschine zu erzeugen. Der Ständerflussregler weist erfindungsgemäß ein Dead-Beat-Regelverhalten auf.

Es wird ferner vorgeschlagen, dass die Steuer- und/oder Regeleinrichtung eine Steuer und/oder Regelstruktur aufweist, die einen Schlupffrequenzregler und einen Pulsmustergenerator mit inhärenter Ständerflussregelung zur Erzeugung von mittelwert-basierten und augenblickswert-basierten Pulssignalen aufweist. Die mittelwert-basierten und die augenblickswert-basierten Pulssignale werden wahlweise und abhängig von der jeweiligen Betriebssituation erzeugt. Unter dem Pulsmustergenerator ist hier also ein gesamter Pulsmustergenerator zu verstehen, der z. B. einzelne Pulsmustergeneratoren aufweisen kann, die jeweils die mittelwertbasierten oder die augenblickswert-basierten Pulssignale erzeugen. Ein Ausgang des Schlupffrequenzreglers ist mit einem Eingang des gesamten Pulsmustergenerators verbunden ist, sodass der Pulsmustergenerator abhängig von einer Stellgröße, die von dem Schlupffrequenzregler erzeugt wird, sowie weiteren Eingangssignalen die Pulssignale erzeugen kann. Der Ständerflussregler ist insbesondere wie bereits oben vorgeschlagen ausgestaltet.

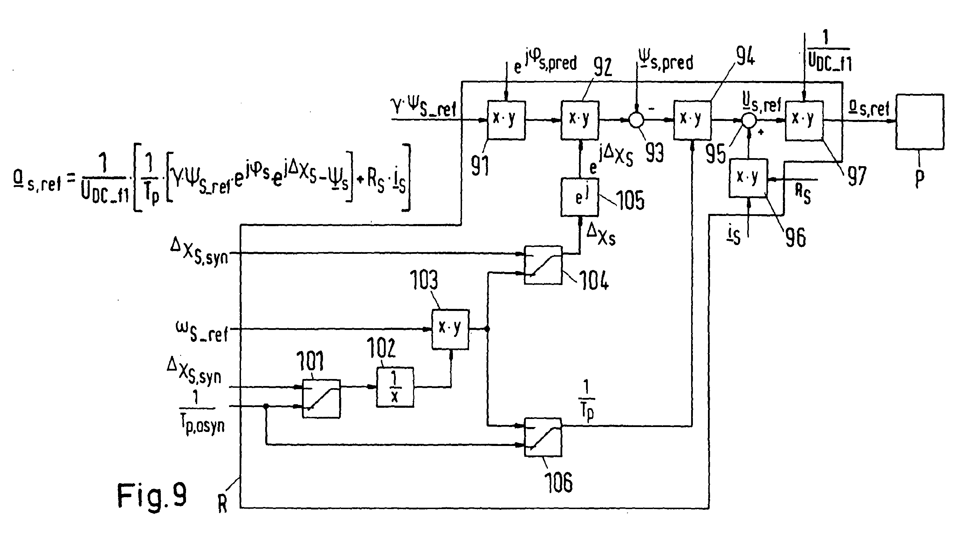

Unter einem Regler mit Dead-Beat-Verhalten wird insbesondere ein Regler verstanden, der (wie ein p-Regler, das heißt ein Regler mit Proportional-Anteil) eine Differenz zwischen einem Sollwert der Führungsgröße und einem Istwert der Führungsgröße bei der Berechnung der Stellgröße berücksichtigt. Es wird daher wie bei einem p-Regler eine Komparation des Sollwertes und des Istwertes durchgeführt. Im Unterschied zu dem konventionellen p-Regler besitzt der Regler mit Dead-Beat-Verhalten jedoch keine einstellbare Regelverstärkung. Eine Gleichung, die das Regelverhalten eines p-Reglers beschreibt und die eine Differenz von Sollwert und Istwert multipliziert mit der (einstellbaren) Regelverstärkung aufweist, kann folglich z. B. dadurch in eine Gleichung überführt werden, die das Regelverhalten eines Dead-Beat-Reglers beschreibt, indem die Regelverstärkung auf einen konstanten, nicht einstellbaren Wert gesetzt wird. Wie noch in der Beschreibung der beigefügten Figuren (insbesondere Fig. 9) gezeigt wird, kann zur Berechnung der Ausgangsgröße eines Reglers mit Dead-Beat-Verhalten die Differenz des Sollwertes und des Istwertes mit einem Faktor oder mit Faktoren multipliziert werden, die abhängig von dem momentanen Betriebszustand und/oder abhängig von einer erwarteten Größe sind. Ein solcher Faktor ist jedoch keine Regelverstärkung im Sinne der Regelungstechnik.

Der Erfindung liegt die Erkenntnis zugrunde, dass im Bereich der mittelwertbasierten Pulsungen bei sprungartigen Änderungen der Zwischenkreisspannung und/oder der Drehzahl es bei Einsatz einer klassischen Regelstruktur mit einem P-Regler für die Ständerflussregelung (und ggf. zusätzlichem Synchronisationsregler zur Gewährleistung des Synchronismus bei synchronen, mittelwertbasierten Pulsungen) zu einem teilweisen Verlust der Steuerbarkeit kommen kann. Dies ist insbesondere dann der Fall, wenn beim Betrieb im Feldschwächbereich eine solche sprungartige Änderung auftritt. Bei derartigen Störanregungen stimmen die für die Regelung verwendete Feldschwächziffer und das Verhältnis des Betrages des Sollwertes des Ständerspannungs-Raumzeiger zu der maximal möglichen Ausgangsspannung des Stromrichters nicht überein. Der Pulsmuster-Generator zur Erzeugung der mittelwertbasierten Pulssignale ist dann zumindest bei Pulsmustern ohne Nullspannungen nicht dazu in der Lage, die von dem Regler angeforderte Ausgangs-Sollspannung am Ausgang des Stromrichters einzustellen.

Andere Regler der Struktur, wie z.B. ein Schlupffrequenzregler und ein Synchronisationsregler zur Synchronisation von Schalthandlungen mit der Grundfrequenz der Rotation des Ständerfluss-Raumzeigers, werden ebenfalls versuchen, die Störung auszuregeln. Da der Pulsmuster-Generator aber das von dem P-Regler geforderte Verhalten nicht erreichen kann, treten insgesamt in der Struktur instabile und nicht reproduzierbare Zustände auf. Es kann ggf. zu einer Sperrung des Stromrichters kommen und somit zum Eintrag eines Störfalls in einen Fehlerspeicher.

Ein Ständerflussregler mit Dead-Beat-Verhalten wird dagegen auf einen Sprung einer Führungs- und/oder Störgröße mit der größtmöglichen Änderung der von ihm berechneten Stellgröße reagieren. Der Regler "priorisiert" die Einstellung des Ständerflusses. Damit ist die größtmögliche Annäherung an die durch den Sprung verursachte neue Betriebssituation möglich, z.B. an eine erhöhte Zwischenkreisspannung. Je nach Betriebssituation vor dem Auftreten des Sprungs kann der Sprung sogar in einem einzigen Regeltakt vollständig ausgeglichen (so genanntes. Dead Beat Verhalten) werden, d.h. die Regelung arbeitet danach sofort wieder, als ob der Sprung nicht aufgetreten wäre. Wenn der Sprung jedoch nicht in einem einzigen Regeltakt ausgeglichen werden kann, so hat die größtmögliche Annäherung an die neue Betriebssituation zumindest den Vorteil, dass Instabilitäten des Regelverhaltens weitestgehend vermieden werden können.

Ein Ausgleichen von Führungs- und/oder Störgrößensprüngen ist beispielsweise dann nicht in einem einzigen Regeltakt möglich, wenn selbst bei der Annahme, dass der Sprung in einem einzigen Regeltakt ausgeglichen werden kann, der Stromrichter sowohl vor als auch nach dem Sprung im Feldschwächbereich ohne Spannungsstellreserve betrieben wird.

Insbesondere aus diesem Grund sowie der hierdurch erreichbaren weitestgehenden Strukturgleichheit für wahlweise mittelwert- und augenblickswert-basierte Pulsungen wird bevorzugt, dass die Struktur außer dem Ständerflussregler mit Dead-Beat-Verhalten und einem diesem vorgeschalteten Schlupffrequenzregler keinen Synchronisationsregler aufweist, der die Schaltung von Nullspannungen des Stromrichters mit der Grundfrequenz der Rotation des Ständerfluss-Raumzeigers synchronisiert. Vielmehr übernimmt die Kombination aus Ständerflussregler und vorgeschaltetem Schlupffrequenzregler die Funktion eines solchen Synchronisationsreglers. Damit ist eine höhere Stabilität der Struktur erreicht, da eine geringere Anzahl von Reglern beteiligt ist. In beiden genannten Ausgestaltungen (mittelwert- und/oder augenblickswert-basiert) erfolgt die Synchronisation anhand der Ist-Ständerflusstrajektorie. Diese Gleichartigkeit der Synchronisation vereinfacht den Wechsel zwischen dem Betrieb des Stromrichters mittels mittelwert- und augenblickswert-basierten Pulsungen.

Die erfindungsgemäße Struktur kann sowohl für den synchronen als auch für den asynchronen mittelwertbasierten Betrieb des Stromrichters benutzt werden kann.

Mit dem Vorangegangenen hängt ein weiterer Vorteil der vorliegenden Erfindung zusammen. Durch:

- den erfindungsgemäßen Ständerflussregler mit Dead-Beat-Verhalten für mittelwert-basierte Pulsungen,
- die damit verbundene Möglichkeit die Synchronisation basierend auf der Ist-Ständerflusstrajektorie vornehmen zu können ohne einen zusätzlichen Synchronisationsregler verwenden zu müssen,
- den zweiten Pulsmustergenerator zur Generierung ständerflusstrajektorien-geführter, augenblickswert-basierter Pulsmuster mit gleicher Art der Synchronisation und
- die Strukturierung der Einrichtung, bei der auch andere Einheiten der Einrichtung unabhängig von der momentan gewählten Art der Pulsmuster betrieben werden,

wird eine so weit wie möglich einheitliche Struktur für unterschiedliche Arten von Pulsmustern erzielt. Ein wesentlicher Vorteil einer einheitlichen Struktur besteht in deren verhältnismäßig geringen Komplexität. Ein weiterer Vorteil besteht darin, dass große Teile der Gesamtstruktur unabhängig von dem Pulsmuster getestet und in Betrieb genommen werden können.

Einheiten, die insbesondere unabhängig von der Art der Pulsmuster betrieben werden, sind z. B. eine Einheit (Wechselrichtermodell) zur Modellierung des Verhaltens des Stromrichters, eine Einheit (Ständerfluss-Beobachter) zur Schätzung der nicht direkt messbaren Größen Ständerfluss, Rotorfluss und Luftspaltdrehmoment der angeschlossenen Asynchronmaschine und zur Ausgabe einer entsprechenden Information an den jeweils aktuellen Pulsmustergenerator, wobei der Flussbeobachter optional außerdem oder alternativ einen geschätzten Wert der Rotordrehzahl der Maschine berechnen und ausgeben kann, eine Einheit zur Berechnung der Magnetisierungsspannung und Aussteuerung und/ oder eine Einheit (siehe dazu z. B. EP 0 945 970 A2) zur Korrektur der Fehlerspannung des Stromrichters, welche dem Pulsmustergenerator nachgeschaltet ist.

Die einheitliche Struktur ermöglicht es, hochdynamische Systemanregungen über Störgrößen (insbesondere Änderungen der Zwischenkreisspannung und/oder Drehzahl) insbesondere bei Pulsungen mit geringer Gangzahl bzw. im Blockbetrieb zusätzlich über dynamisch geschaltete Nullspannungen zu beherrschen. Unter "dynamisch geschalteten Nullspannungen" werden Nullspannungen verstanden, die zusätzlich zu den ggf. vorhandenen, regulären Nullspannungen (z. B. synchronen Nullspannungen) geschaltet werden, um schnell auf die Störanregung reagieren zu können. Aufgrund der erfindungsgemäßen Regelstruktur und aufgrund einer im Folgenden noch beschriebenen Steuerung der Abtastung von Messgrößen kann ohne nennenswerte Verzögerung z. B. von augenblickswertbasierten Pulsungen geringer Gangzahl, insbesondere Blocktaktung (SP1), EP3, CP3, EP5 und CP5 (zur Erläuterung dieser Abkürzungen siehe Figurenbeschreibung) je nach Art der Ständerflusstrajektorie (Sechseck, oder Sechseck mit eingeklappten Ecken) auf eine entsprechende Ausgestaltung der DSR für die Zeit der unmittelbaren Störanregung umgeschaltet werden. Eine negative Beeinflussung von ggf. vorhandenen synchronen Nullspannungen und den dynamisch geschalteten Nullspannungen entfällt somit automatisch. Da die Ständerfluss-Trajektorien die gleiche Form und Amplitude aufweisen, kann nach Beendigung des Einschwingvorganges auf den neuen Arbeitspunkt problemlos wieder z. B. in die ursprüngliche synchrone Pulsung gewechselt werden.

Ferner sind in der Praxis Einheiten zur Filterung, insbesondere zur Filterung vektorieller Größen (wie der gemessenen Ständerströme) vorhanden. Vorzugsweise erfolgt die Filterung in Feldkoordinaten, wobei aufgrund der erfindungsgemäßen Regelstruktur die Größen vorteilhaft für verschiedene Aufgaben benutzt werden können. Um die Größen in Feldkoordinaten filtern zu können, werden sie in ein mit dem Ständer- oder Rotorfluss umlaufendes Koordinatensystem transformiert. Filterparameter (wie Filter-Eckfrequenzen) sind an die jeweiligen Pulsmuster adaptierbar.

Bei einer Ausgestaltung der Einrichtung weist der Stromrichter eine Mehrzahl elektronischer Ventile, insbesondere IGBT (Insulated Gate Bipolar Transistor), auf, die entsprechend den vom Pulsmustergenerator erzeugten Pulssignale ein- und ausgestaltet werden, wobei die Einrichtung eine Steuereinrichtung zur Steuerung des Stromrichters aufweist und wobei

- die Steuereinrichtung eine Recheneinheit zum Berechnen von Phasen-Schaltzeitpunkten aufweist,
- die Steuereinrichtung mit Registern kombiniert ist, in die jeweils ein einem Phasen-Schaltzeitpunkt entsprechender Datenwert geschrieben werden kann,
- eine Vergleichseinrichtung vorgesehen ist, die ausgestaltet ist zu prüfen, ob ein sich zyklisch mit fortschreitender Zeit ändernder Datenwert mit einem Datenwert in den Registern übereinstimmt, und - wenn dies der Fall ist - eine dem jeweiligen Register zugeordnete Schaltaktion auszulösen,
- für zumindest eine Schaltaktion, vorzugsweise für alle sechs möglichen Schaltaktionen, zumindest ein weiteres Register vorgesehen ist, sodass ohne erneutes Schreiben von Datenwerten in die Register die Schaltaktion mehrfach ausgelöst werden kann.

Dem entspricht eine Ausgestaltung des Verfahrens, wobei

- Phasen-Schaltzeitpunkte berechnet werden, zu denen auf eine Phase des Stromrichters bezogene Schaltaktionen ausgeführt werden sollen,
- jeweils ein den Phasen-Schaltzeitpunkten entsprechender Datenwert in ein Register geschrieben wird,
- geprüft wird, ob ein sich zyklisch mit fortschreitender Zeit ändernder Datenwert mit einem Datenwert in den Registern übereinstimmt, und - wenn dies der Fall ist - eine dem jeweiligen Register zugeordnete -Schaltaktion ausgelöst wird,
- für zumindest eine Schaltaktion, vorzugsweise für alle sechs möglichen Schaltaktionen, mehr als ein Phasen-Schaltzeitpunkt im Voraus berechnet wird und in Register geschrieben wird, sodass ohne erneutes Schreiben von Datenwerten in die Register die Schaltaktion mehrfach ausgelöst werden kann.

Bei einer weitergehenden Ausgestaltung der Einrichtung ist die Recheneinheit ausgestaltet, Abtastzeitpunkte festzulegen, zu denen für das Berechnen der Phasen-Schaltzeitpunkte erforderliche Messsignale abgetastet werden sollen, und ist ausgestaltet, die Phasen-Schaltzeitpunkte wiederholt in aufeinander folgenden Berechnungszyklen zu berechnen, und wobei die Steuereinrichtung ausgestaltet ist, den Phasen-Schaltzeitpunkten entsprechende Datenwerte, die in einem der Berechnungszyklen berechnet worden sind, zu dem nächst folgenden Abtastzeitpunkt in die Register zu schreiben.

Dem entspricht eine Ausgestaltung des Verfahrens, wobei Abtastzeitpunkte festgelegt werden, zu denen für das Berechnen der Phasen-Schaltzeitpunkte erforderliche Messsignale abgetastet werden sollen, wobei die Phasen-Schaltzeitpunkte wiederholt in aufeinander folgenden Berechnungszyklen berechnet werden, und wobei die Phasen-Schaltzeitpunkte, die in einem der Berechnungszyklen berechnet worden sind, zu dem nächst folgenden Abtastzeitpunkt in die Register geladen werden.

Dabei können zu dem nächstfolgenden Abtastzeitpunkt in alle Register, die zum Auslösen von Schaltaktionen geprüft werden können, neue Datenwerte geschrieben werden.

Bei einer Ausgestaltung der Einrichtung weist der Stromrichter eine Mehrzahl elektronischer Ventile, insbesondere IGBT (Insulated Gate Bipolar Transistor), auf, die zum Betrieb des Stromrichters wiederholt ein- und ausgestaltet werden, wobei die Struktur eine Steuereinrichtung zur Steuerung des Stromrichters aufweist und wobei

- die Steuereinrichtung eine Recheneinheit zum Berechnen von Phasen-Schaltzeitpunkten aufweist,
- die Recheneinheit ausgestaltet ist, Abtastzeitpunkte festzulegen, zu denen für das Berechnen der Phasen-Schaltzeitpunkte erforderliche Messsignale abgetastet werden sollen,
- die Recheneinheit ausgestaltet ist, zumindest einen Teil der Phasen-Schaltzeitpunkte und zumindest einen Teil der Abtastzeitpunkte auf gemeinsame Zeitpunkte festzulegen, an denen jeweils ein Abtastzeitpunkt und zumindest ein Phasen-Schaltzeitpunkt zusammenfallen,
- die Recheneinheit ausgestaltet ist, in ein Zeitintervall, dessen Anfang und dessen Ende jeweils durch einen der gemeinsamen Zeitpunkte definiert ist, zumindest einen zusätzlichen Abtastzeitpunkt festzulegen, falls das Zeitintervall für mehr als einen Berechnungszyklus zur Berechnung neuer Phasen-Schaltzeitpunkte ausreicht, und nach dem zusätzlichen Abtastzeitpunkt den Berechnungszyklus auf Grundlage von Werten durchzuführen, die zu dem zusätzlichen Abtastzeitpunkt abgetastet wurden.

Dem entspricht eine Ausgestaltung des Verfahrens, wobei

- Phasen-Schaltzeitpunkte berechnet werden,
- Abtastzeitpunkte festgelegt werden, zu denen für das Berechnen der Phasen-Schaltzeitpunkte erforderliche Messsignale abgetastet werden sollen,
- zumindest ein Teil der Phasen-Schaltzeitpunkte und zumindest ein Teil der Abtastzeitpunkte auf gemeinsame Zeitpunkte festgelegt werden, an denen jeweils ein Abtastzeitpunkt und zumindest ein Phasen-Schaltzeitpunkt zusammenfallen,
- in einem Zeitintervall, dessen Anfang und dessen Ende jeweils durch einen der gemeinsamen Zeitpunkte definiert ist, zumindest ein zusätzlicher Abtastzeitpunkt festgelegt wird, falls das Zeitintervall für mehr als einen Berechnungszyklus zur Berechnung neuer Phasen-Schaltzeitpunkte ausreicht, und nach dem zusätzlichen Abtastzeitpunkt der Berechnungszyklus auf Grundlage von Werten durchgeführt wird, die zu dem zusätzlichen Abtastzeitpunkt abgetastet wurden.

Bei einer Ausgestaltung des Verfahrens wird zusätzlich zu dem Pulsmustergenerator zur Erzeugung von mittelwert-basierten Pulssignalen ein zweiter Pulsmustergenerator verwendet, dem ein Sollwert des Ständerflusses als Eingangsgröße zugeführt wird, um beim Betrieb der Asynchronmaschine mittels ständerflusstrajektorien-geführter, augenblickswert-basierter Pulsmuster die Pulsmuster unmittelbar abhängig von dem Sollwert und dem Istwert des Ständerflusses zu generieren.

Dabei kann der Stromrichter oberhalb des Spannungstypenpunktes, d. h. im Feldschwächbereich, ohne Spannungsstellreserve betrieben werden, wobei ein Pulsmusterwechsel jederzeit möglich ist.

Bei einer Ausgestaltung des Verfahrens kann für einen Wechsel von einem ersten Pulsmuster zu einem zweiten Pulsmuster geprüft werden, bei welchem der beiden Pulsmuster der Stromrichter eine geringere maximal mögliche Aussteuerung aufweist, wobei,

- wenn der Stromrichter bei dem ersten Pulsmuster eine geringere maximal mögliche Aussteuerung aufweist, ohne Änderung der Aussteuerung der Wechsel zu dem zweiten Pulsmuster vollzogen wird und der Stromrichter nach dem Wechsel zumindest vorübergehend in der Feldschwächung betrieben wird und
- wenn der Stromrichter bei dem zweiten Pulsmuster eine geringere maximal mögliche Aussteuerung aufweist, die Aussteuerung, falls erforderlich, soweit verringert wird, dass sie unter der maximal möglichen Aussteuerung bei Betrieb mit dem zweiten Pulsmuster liegt, und anschließend der Wechsel zu dem zweiten Pulsmuster vollzogen wird.

Ausführungsbeispiele und weitere bevorzugte Merkmale der vorliegenden Erfindung werden nun unter Bezugnahme auf die beigefügte Zeichnung beschrieben. Die einzelnen Figuren der Zeichnung zeigen:

Fig. 1    die Struktur einer besonders bevorzugten Ausführungsform der erfindungsgemäßen Regeleinrichtung;

Fig. 2    Details der Struktur gemäß Fig. 1, wobei jedoch andere Schnittstellen und damit auch zum Teil andere Einheiten dargestellt werden;

Fig. 3    eine schematische Darstellung von Ständerspannung und Ständerfluss-Trajektorie für ständerfluss-geführte Pulsungen mit eingeklappten Ecken;

Fig. 4    eine schematische Darstellung von Ständerspannung und Ständerfluss-Trajektorie für ständerfluss-geführte Pulsungen ohne eingeklappte Ecken, d.h. mit sechseckiger Flussfigur;

Fig. 5    eine schematische Darstellung von Ständerspannung und Ständerfluss-Trajektorie für PWM-basierte, synchrone Pulsungen;

Fig. 6    eine schematische Darstellung des Effekts der Flusseindrehung;

Fig. 7    eine Darstellung verschiedener, zeitlicher Abtastwerte des Ständerfluss-Zeigers über eine Anzahl von Abtastzyklen bzw. Regelungszyklen des erfindungsgemäßen Regelverfahrens mit mittelwert-basierter Pulsmustergenerierung, wobei sich die Zwischenkreisspannung während dieser Zyklen sprungartig erhöht;

Fig. 8    eine Darstellung verschiedener, zeitlicher Abtastwerte des Ständerfluss-Zeigers über eine Anzahl von Abtastzyklen bzw. Regelungszyklen des erfindungsgemäßen Regelverfahrens mit mittelwert-basierter Pulsmustergenerierung, wobei sich die Drehzahl der Maschine (z. B. auf Grund eines Lastwechsels) während dieser Zyklen sprungartig verkleinert;

Fig. 9    ein Signalflussdiagramm, das schematisch die Arbeitsweise einer besonders bevorzugten Ausführungsform des erfindungsgemäßen Regelverfahrens mit mittelwert-basierter Pulsmustergenerierung mit Dead-Beat-Verhalten der Ständerflussregelung zeigt;

Fig. 10    ein Abtastzeitintervall, in dem innerhalb einer Wechselrichterphase zwei Umschaltungen vorgenommen werden;

Fig. 11    einen Zeitraum mit mehreren Abtastintervallen, wobei zwischen den einzelnen Schalthandlungen des Wechselrichters unterschiedlich viele und unterschiedlich lange Abtastzeitintervalle liegen;

Fig. 12    eine symbolische Anordnung mit Elementen zur Berechnung der Schaltzeitpunkte und zur Durchführung der Schalthandlungen;

Fig. 13    ein Zeitdiagramm mit einer zeitlichen Folge von Abtastzeitpunkten und jeweils dazwischen liegendem Zeitintervall, die für verschiedene Rechenaufgaben und Operationen der Regelung mit mittelwert-basierter Pulsmustergenerierung genutzt werden, sowie den jeweiligen Schaltzustand der drei Wechselrichterphasen,.

Fig. 14    einen Ausschnitt der Ständerflusstrajektorie mit den jeweiligen Unterzuständen der Zustandsmaschine pro Sektor für 7-fach Taktung mit eingeklappten Ecken,

Fig. 15    einen Ausschnitt der Ständerflusstrajektorie mit den jeweiligen Unterzuständen der Zustandsmaschine pro Sektor für 5-fach Taktung ohne eingeklappten Ecken,

Fig. 16    ein Zustandsübergangsdiagramm mit den jeweiligen Unterzuständen inklusive Pulsmusterwechsel in angrenzende Verfahren für 7-fach Taktung mit eingeklappten Ecken und

Fig. 17    die Projektionsachsen zur Flusskomperation der ständerflussgeführten Pulsgenerierung sowie die Definition der Schaltwinkel.

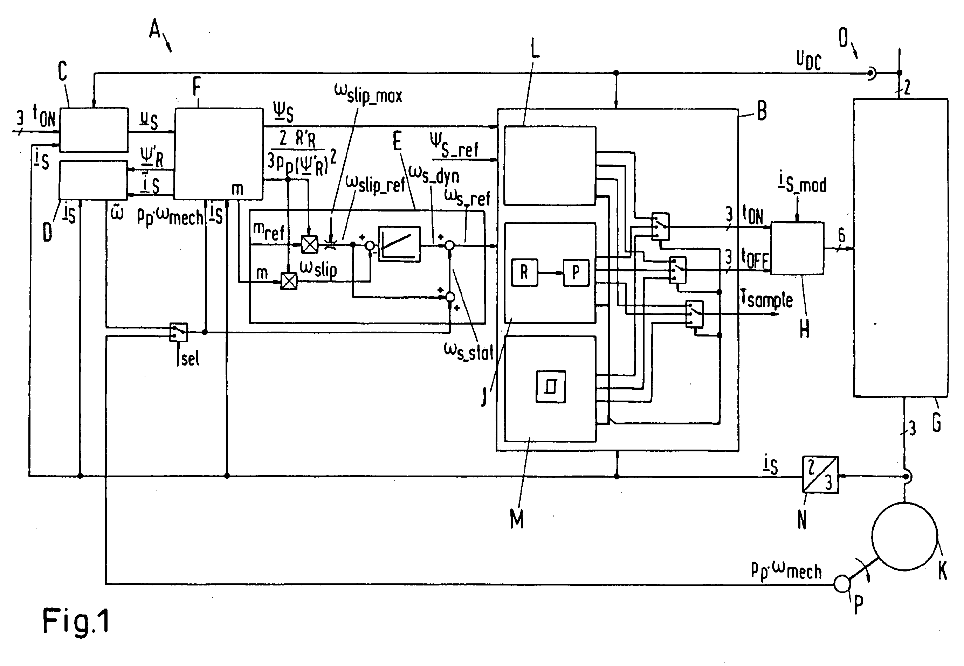

In Fig. 1 ist eine Struktur A der gesamten Antriebsregelung einer Drehstromasynchronmaschine, die wahlweise mit oder ohne Drehzahlgeber betrieben werden kann, dargestellt. Im Einzelnen sind dargestellt und mit den folgenden Bezugszeichen versehen: ein Pulsmustergenerator B, ein Schlupffrequenz- bzw. Drehmomentregler E, eine Einrichtung D zur optionalen Drehzahlschätzung (Drehzahlschätzer), eine Einrichtung F zur Nachbildung der Flussverkettungen (Ständer- und Rotorfluss) sowie des Drehmoments (Flussbeobachter), eine Einrichtung C zur Modellierung des Verhaltens eines von der Struktur A angesteuerten Wechselrichters G, eine Einrichtung H zur Störgrößenkompensation, die ein inverses Wechselrichtermodel enthält.

Der innerhalb einer signal- oder mikroprozessorgesteuerten Signalelektronik realisierte Pulsmustergenerator B ist für die Durchführung eines wesentlichen Teils des erfindungsgemäßen Verfahrens verantwortlich. Insbesondere ist in ihm das erfindungsgemäße Regelverfahren mit mittelwert-basierter Pulsmustergenerierung und Dead-Beat-Verhalten der Ständerflussregelung (innerhalb von Einrichtung J) implementiert. Außerdem enthält er eine Implementierung eines ständerflussgeführten, augenblickswert-basierten Pulsmustergenerators (innerhalb der Einrichtung M).

Einrichtung H ist eingangsseitig mit dem Pulsmustergenerator B verbunden und empfängt von diesem Signale, die die Schaltzeitpunkte der Wechselrichterphasen des Wechselrichters G vorgeben. Ausgangsseitig ist die Einrichtung H mit den Ansteuereinheiten der Ventile des Wechselrichters G verbunden und überträgt Pulssignale zu den Ventilen, die diese ein- oder ausschalten. Bei der Erzeugung der Pulssignale kompensiert die Einrichtung H in an sich bekannter Weise Störgrößen und führt darüber hinaus die Verriegelung und Mindestschaltzeitüberwachung der einzelnen Ventile durch.

Der zeitliche Verlauf der Eingangssignale der Einrichtung H kann auf unterschiedlichen Pulsmustern beruhen. Insbesondere zu Beginn des Magnetisierungsvorganges der Asynchronmaschine K, können die Eingangssignale aus der Einheit L des Pulsmustergenerators B stammen, während des weiteren Betriebes durch mittelwert-basierte Pulsmuster, z. B. Pulsweitenmodulations- (PWM) Pulsmuster, aus der Einheit J stammen oder während des Betriebes mit ständerflusstrajektorien-geführten Pulsmustern aus der Einheit M stammen, die ebenfalls Teil des Pulsmustergenerators B ist.

Gemäß der Darstellung in Fig. 1 kann der Ständerflussregler, der für die Generierung von mittelwert-basierten Pulsmustern vorgesehen ist, als dem Pulsmustergenerator B inhärent bezeichnet werden. Dieser Ständerflussregler ist in Fig. 1 mit Bezugszeichen R bezeichnet. Ferner ist in Fig. 1 ein Pulmustergenerator P zur Generierung der mittelwert- basierten Pulsmuster als Teil des gesamten Pulsmustergenerators B dargestellt. Ein Ausgang des Ständerflussreglers R ist mit einem Eingang des Pulsmustergenerators P verbunden. Beide Einrichtungen R, P sind als Teil der Einheit J dargestellt. Auf eine mögliche Ausgestaltung der Einrichtungen R, P wird noch durch Fig. 9 und die zugehörige Beschreibung eingegangen.

Fig. 1 zeigt außerdem die über drei Phasen mit dem Wechselrichter G verbundene Asynchronmaschine K, eine Strommesseinrichtung N, die Ströme durch zumindest zwei der drei Phasen misst, einen Spannungssensor O, der die Zwischenkreisspannung am Eingang des Wechselrichters G misst, und einen optionalen Drehzahlgeber P.

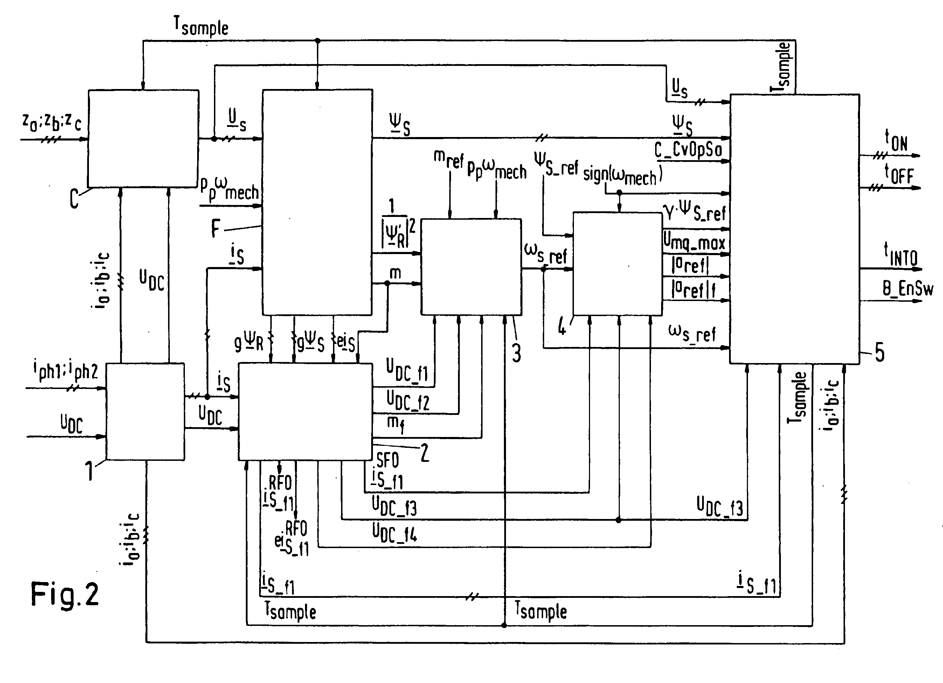

Die Darstellung der Struktur A in Fig. 1 ist schematisch zu verstehen und zeigt lediglich wesentliche Teile der Struktur. Weiterführende Details werden nun unter Bezugnahme auf Fig. 2 beschrieben, in der die strukturexternen Elemente und Einrichtungen nicht dargestellt sind.

In Fig. 2 sind insgesamt sieben Einrichtungen der Struktur A dargestellt. Dabei sind die Einrichtung C (Wechselrichtermodell) und der Flussbeobachter F mit den entsprechenden in Fig. 1 dargestellten Einrichtungen identisch. Der Pulsmustergenerator 5 jedoch unterscheidet sich von dem Pulsmustergenerator B in Fig. 1 dadurch, dass er andere Schnittstellen aufweist. Wiederum kann er jedoch den erfindungsgemäßen Ständerflussregler mit Dead-Beat-Verhalten und den nachgeschalteten Pulsmustergenerator für mittelwert-basierte Pulsungen sowie weitere Pulsmustergeneratoren für andere Pulsungen enthalten.

Außerdem sind eine Einrichtung 1 zur Erfassung analoger Messwerte (analoge IstWerterfassung), ein Satz Filtereinrichtungen 2, eine Einrichtung 3 zur Zwischenkreisstabilisierung, zur Realisierung eines Kippschutzes, für eine stationäre Ständerstrombegrenzung und für eine Schlupffrequenzregelung sowie eine Einrichtung 4 zur Berechnung der Magnetisierungsspannung und der Aussteuerung der Asynchronmaschine dargestellt. Der Schlupffrequenzregler E gemäß Fig. 1 ist insbesondere Teil der Einrichtung 3 gemäß Fig. 2. Schnittstellen zwischen den dargestellten Einheiten und die jeweils empfangenen, ausgegebenen oder übertragenen physikalischen Größen sind in Fig. 2 ebenfalls dargestellt. Auf die Bedeutung der in Fig. 2 verwendeten Symbole wird noch eingegangen, sobald und soweit es für die Erfindung von Bedeutung ist.

Als Ausgangsgrößen von Einrichtung 4, deren Werte zu dem Pulsmustergenerator 5 übertragen werden, sind in Fig. 2 insbesondere die Soll-Aussteuerungen $|\alpha_{ref}|$ und $|\alpha_{ref}|_f$ dargestellt. Diese Soll-Aussteuerungen dienen insbesondere als Eingangsgrößen für Gleichungen [5] und [7] bzw. für die Entscheidung, ob die Pulsmuster-Art gewechselt wird.

Alle von den Einheiten in Fig. 2 ausgeführten Berechnungen und/oder Operationen werden mit wenigen Ausnahmen jeweils zwischen zwei Abtastzeitpunkten der Messgrößen ausgeführt, die für den Betrieb der Struktur A erforderlich sind. Die Messgrößen sind insbesondere die Zwischenkreisspannung $U_{DC}$, die Ströme $i_{ph1}$, $i_{ph2}$ durch zwei der drei Phasen zwischen Wechselrichter G und Asynchronmaschine K (diese Messgrößen werden der Einheit 1 zugeführt) und optional die Drehzahl $\omega_{mech}$ der Asynchronmaschine K multipliziert mit der Polpaarzahl pp.

Wenn feststeht, dass zum folgenden, d.h. dem nächsten in der Zukunft liegenden Abtastzeitpunkt Schaltaktionen der Ventile des Stromrichters berechnet sein müssen, werden alle erforderlichen Rechenaufgaben von den sieben Einheiten innerhalb eines Abtastzyklus, d.h. zwischen zwei nächst benachbarten Abtastzeitpunkten ausgeführt. Es wird jedoch später noch auf Fälle eingegangen, in denen nur ein Teil der Einheiten und/oder nur ein Teil der Aufgaben innerhalb eines Abtastzyklus abgearbeitet werden, z.B. weil neue Schaltaktionen noch nicht bis zum folgenden Abtastzeitpunkt berechnet sein müssen.

Einheit 1 empfängt wie erwähnt Messwerte von mindestens zwei der drei Phasenströme und einen Messwert der Zwischenkreisspannung. Sie berechnet die Komponenten eines auf das Ständerkoordinatensystem des Asynchronmotors bezogenen Ständerstromraumzeigers. Diese werden als Raumzeiger u.a. zu den Einrichtungen 3 (Flussmodell) und 4 (Filter) übertragen. Die beiden gemessenen sowie der dritte berechnete Phasenstrom werden zu den Einrichtungen C und B übertragen.

Die Einrichtung C (Wechselrichtermodell) berechnet unter Verwendung der Information über die Zwischenkreisspannung sowie geeignet ermittelten Phasenschaltinformationen und den gemessenen Wechselrichterphasenströmen (weitere Details zu der Funktionsweise und Varianten der Einrichtung C sind z.B. in EP 09 45 970 und in EP 09 45 956 beschrieben) einen Klemmenspannungsraumzeiger, der wiederum auf das Ständerkoordinatensystem der Asynchronmaschine bezogen ist.

In dem Flussbeobachter F ist ein umschaltbares bzw. kontinuierlich ineinander überblendbares Flussmodell (Spannungsmodell, Strommodell) implementiert, welches die Zustandsgrößen der Drehstromasynchronmaschine (insbesondere den Ständerflussraumzeiger, den Rotorflussraumzeiger sowie deren Orientierungswinkel) sowie das daraus abgeleitete Drehmoment berechnet. Für weitere Details wird auf die Beschreibungseinleitung und auf die WO 2005/018086 verwiesen. Das Spannungsmodell berechnet zusätzlich einen geschätzten Ständerstromraumzeiger, der zusammen mit dem gemessenen Ständerstromraumzeiger in vorteilhafter Weise z.B. zur Drehzahlschätzung oder Temperaturschätzung der Asynchronmaschine verwendet werden kann und/oder im Rahmen eines Modus zur Simulation des Stromrichters für eine Istwertsimulation verwendet werden kann. Außerdem findet in Einrichtung F eine Adaption oder Nachführung der betriebsmäßig veränderlichen Parameter des elektrischen Ersatzschaltbildes der Asynchronmaschine statt, insbesondere der Parameter Ständer- und Rotorwiderstand, Hauptinduktivität sowie des äquivalenten Eisenverluststromes bzw. -widerstandes.

In den Filtereinrichtungen 2 findet eine adaptive Filterung (bei variabler Abtastzeit und mit pulsmusterabhängigen Eckfrequenzen) mit Filtern erster oder zweiter Ordnung statt. Gefiltert werden Messwerte der Zwischenkreisspannung und des Ständerstromraumzeigers in verschiedenen Koordinatensystemen (als Ausgangsgrößen dargestellt und teilweise mit anderen ebenfalls gezeigten Einrichtungen verbunden sind der Ständerstromraumzeiger in Ständerkoordinaten, in ständerflussfesten und rotorflussfesten Koordinaten sowie der Fehlerstromraumzeiger in rotorflussfesten Koordinaten). Dabei werden diese vektoriellen Größen vorzugsweise in den Feldkoordinaten (d.h. in Ständerfluss- und/oder Rotorflusskoordinaten) gefiltert. Außerdem werden Berechnungsergebnisse, d.h. Rechenwerte anderer Einrichtungen, insbesondere des Flussbeobachters F, gefiltert, um Oberschwingungen zu dämpfen, die durch das Schaltverhalten des Wechselrichters und/oder durch die Pulsmuster verursacht werden. Insbesondere können die skalaren Größen Zwischenkreisspannung und geschätztes Drehmoment jeweils mit mehreren verschiedenen Filtern gefiltert werden.

Die Einrichtung 3 führt wie bereits erwähnt zum Schutz von Stromrichter und/oder der Maschine eine Kippschlupfbegrenzung und eine stationäre Ständerstrombegrenzung durch. Darüber hinaus erfolgt zur Stabilisierung des LC-Eingangsfilters bei Gleichstrom-Direktspeisung eine $U_{DC}$-Aufschaltung, das heißt eine Aufschaltung der Spannungswelligkeit des Gleichspannungs- (DC) Zwischenkreises auf den Drehmoment- bzw. Schlupffrequenzsollwert, bspw.

gemäß DE 4110225.

Außerdem führt die Einrichtung 3 die eigentliche Schlupffrequenzregelung durch. Dies ist, konstanten Fluss vorausgesetzt, gleichbedeutend mit einer Drehmomentregelung stellt jedoch für den oben erwähnten Kippschutz sicher, dass die eingestellte maximale Schlupffrequenz eingehalten wird. Als Ausgangsgröße gibt die Einrichtung 3 einen Referenzwert $\omega_{S\_ref}$ der Ständerfrequenz aus, mit der der Ständerflussraumzeiger in dem entsprechenden auf den Ständer bezogenen Koordinatensystem rotieren soll.

Dieser von der Einrichtung 3 ausgegebene Wert wird einerseits zu dem Pulsmustergenerator B und andererseits zu der in Einrichtung 4 implementierten Magnetisierungsspannungs- und Aussteuerungsberechnung übertragen.

Die Einrichtung 4 führt insbesondere eine Berechnung der maximalen Grundschwingungs-Magnetisierungsspannung zum Zweck der Feldschwächregelung und der Aussteuerberechung durch. Der Betrag der maximalen Magnetisierungsspannung $\left|u_{mq}'\right|_{\max}$ wird insbesondere gemäß folgender Gleichung berechnet:

$$U_{mq\_\max} = \sqrt{\left(\frac{2}{\pi}U_{DC}\right)^2 - \left(R_S i_{Sd}\right)^2} - R_S i_{Sq} \cdot sign(\omega_{Fs}) \qquad [1]$$

darin bedeuten $R_S$ äquivalenter Ständerwiderstand der Maschine,. $i_{Sd}$ gefilterter Realteil des Ständerstromraumzeigers im ständerflussorientierten Koordinatensystem; $i_{Sq}$ gefilterter Imaginärteil des Ständerstromraumzeigers im ständerflussorientierten Koordinatensystem und $\omega_{Fs}$ Sollwert der Ständerfrequenz.

Die Sollaussteuerung $|a_{ref}|$ des Stromrichters bzw. der Maschine ist definiert als der Quotient aus der aktuellen Magnetisierungsspannung $U_{mq}$ und der maximalen Magnetisierungsspannung $U_{mq\_max}$. Sie wird insbesondere wie folgt berechnet:

$$\left|a_{ref}\right| \approx \frac{U_{mq}}{U_{mq\_\max}} = \frac{\left|\omega_{FS} \cdot \psi_{S\_ref}\right|}{U_{mq\_\max}}, \qquad [2]$$

wobei $\psi_{S\_ref}$ der Ständerflusssollwert ist. Die Ausgangsgröße der Einrichtung 4, die an den Pulsmustergenerator B ausgegeben wird, ist das Produkt der Feldschwächziffer $\gamma$ mit dem Ständerflusssollwert $\psi_{S\_ref}$, welches gemäß folgender Gleichung [3] berechnet wird:

$$\gamma \cdot \Psi_{s\_ref} = \frac{\left|a_{ref,\lim}\right| \cdot U_{mq\_\max}}{\omega_{FS}}, \qquad [3]$$

wobei $|a_{ref,\lim}|$ gleich der maximalen Aussteuerung des jeweiligen momentanen Pulsmusters ist, wenn die mit der oben wiedergegebenen Gleichung berechnete Aussteuerung $|a_{ref}|$ größer oder gleich der maximalen Aussteuerung ist, und wobei $|a_{ref,\lim}|$ gleich der Aussteuerung $|a_{ref}|$ ist, wenn die Aussteuerung kleiner als die maximale Aussteuerung ist. Dabei ist die Feldschwächziffer $\gamma$ auf ihren Maximalwert 1 begrenzt.

Gemäß einer bevorzugten Ausgestaltung der Erfindung sind die bislang anhand der Figur 2 erläuterten Funktionen der Einrichtungen 1 bis 4 sowie C und F im gesamten Betriebsbereich des Antriebes und unabhängig vom jeweils verwendeten Pulsverfahren, d. h

- mittelwert-basierte, asynchrone und/oder synchrone Pulsungen
- augenblickswert-basierte, ständerflussgeführte synchrone Pulsungen inklusive Vollblockbetrieb

identisch. Es wird hier also mit Ausnahme der Pulsmustergenerierung (Einrichtung B) dieselbe Regelstruktur für alle Pulsverfahren eingesetzt. Dies gilt nicht nur für die spezielle, hier beschriebene Ausgestaltung, sondern kann auch bei anderen Ausgestaltungen der Erfindung der Fall sein. Ggf. bei anderen genannten Regelverfahren gemäß des Standes der Technik notwendige Strukturumschaltungen mit den damit verbundenen Ablöseerscheinungen zwischen den verschiedenen Regelstrukturen entfallen.

In dem Pulsmustergenerator B erfolgt die Berechung der Ein- und Ausschaltzeiten für die einzelnen Wechselrichterphasen ($t_{ON}$ und/oder $t_{OFF}$) und die Steuerung der Abtastzeitpunkte $t_{INT0}$.

In dem konkreten Ausführungsbeispiel, das hier beschrieben wird, können ausgehend von dem gemeinsamen Regelungsteil (Schlupffrequenzregler, Einrichtung 3) drei verschiedene Kategorien von Pulsmustern erzeugt werden. Der Stromrichter wird jeweils nur mit Pulsmustern aus einer der Kategorien betrieben, wobei ein Wechsel in eine andere Kategorie auf einfache Weise möglich ist. Pulsmuster der ersten Kategorie werden nach Stromrichtersperre zu Beginn des Magnetisierungsvorganges der Maschine erzeugt (Einheit L in Fig. 1 erzeugt diese Pulsmuster, wobei sowohl Aufmagnetisierungsvorgänge einer vollständig entmagnetisierten als auch teilentmagnetisierten Maschine möglich sind). Asynchrone und synchrone mittelwert-basierte Pulsungen fallen in die zweite Kategorie der so genannten mittelwert-basierten Pulsmuster (Einheit J in Fig.1). Nicht nur bei der hier beschriebenen Ausgestaltung sind jedoch auch andere mittelwert-basierte Pulsmuster möglich, z. B. (7-fach, 5-fach, 3-fach Taktungen oder Blocktaktung gemäß Stanke, G., Horstmann, D.: "Die stromrichtemahe Antriebsregelung des Steuergerätes für Bahnautomatisierungssysteme SIBAS32, eb-Elektrische Bahnen, Band 90 (1992, Heft 11, Seite 344-350 bzw. Richter S.: Analyse und Bewertung von Steuerverfahren für pulsumrichtergespeiste Asynchronmaschinen, Dissertation 1996, VDI-Fortschrittsberichte, Reihe 21, Nr.207). Flusstrajektorien-geführte, augenblickswert-basierte Pulsmuster (dritte Kategorie) werden von Einheit M in Fig. 1 generiert.

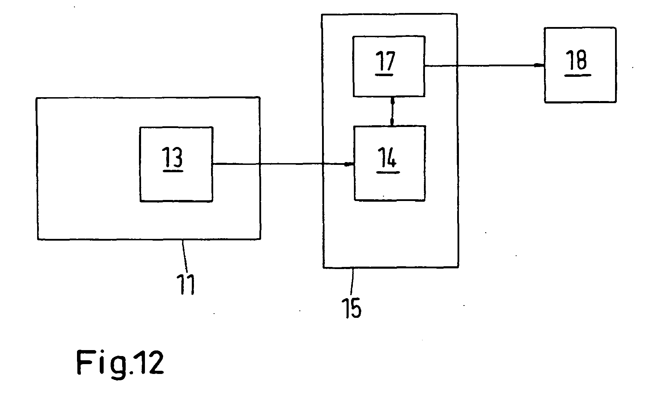

Fig. 12 zeigt eine Anordnung zur Steuerung der Ventile eines Stromrichters. Die Anordnung weist eine Steuer- und/oder Regeleinrichtung 11 auf, deren vorteilhafte Ausführungsform beispielhaft anhand Figur 2 weiter oben erläutert wurde.

Bestandteil der Einrichtung 11 ist eine Schaltzeitpunkt-Berechnungseinheit 13 (s.a. Einrichtung B in Figur 1 bzw. Figur 2) zur Berechnung der Phasen-Schaltzeitpunkte, die jeweils in aufeinander folgenden Berechnungszyklen auf Basis aktueller Abtastwerte die Schaltzeitpunkte berechnet, die zum folgenden Abtastzeitpunkt in prozessorunabhängige Register 14 (s.g. Compare Capture Units) geschrieben werden sollen.

Die Register 14 können wie in dem hier beschrieben Ausführungsbeispiel Teil einer prozessorunabhängigen programmierbaren Logik 15 sein, die bspw. in einem FPGA realisiert sind. Innerhalb dieser Logik werden die jeweiligen Registerinhalte mit einem sich laufend zyklisch ändernden Wert (Zähler) 17 verglichen. Wenn einer der Werte in den Registern für die jeweiligen Schaltaugenblicke mit dem sich zyklisch ändernden Wert übereinstimmt, wird automatisch die dem Register zugeordnete Schaltaktion (ON/OFF) zum zugeordneten Schaltaugenblick (k, k+1) ausgeführt. Die Logik gibt ein entsprechendes Signal aus, das zu einer Ventil-Steuereinrichtung (Verriegelungseinrichtung) 18 übertragen wird, die die entsprechenden Schaltaktionen der Ventile steuert, insbesondere das Schalten der Ventile des Stromrichters unter Berücksichtigung der Verriegelungs- und Mindestschaltzeitenzeiten.

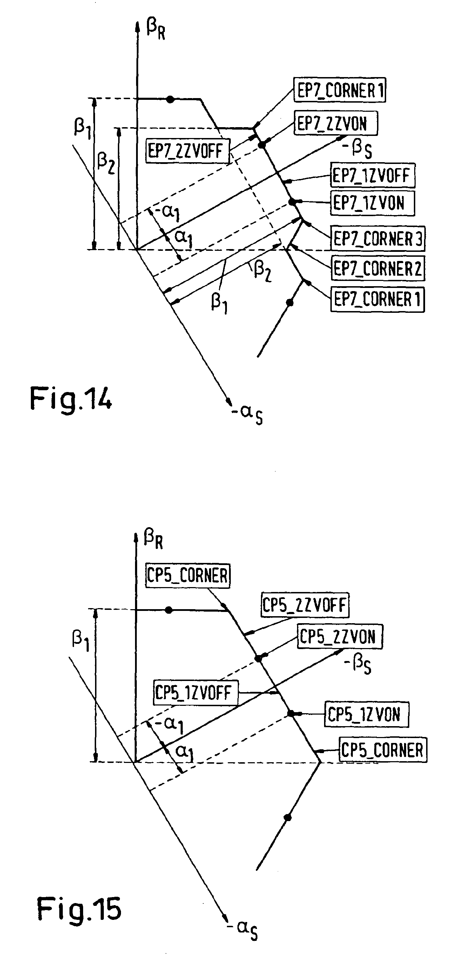

Der Pulsmustergenerator B ist innerhalb des zyklisch ablaufenden Mikroprozessor oder Signalprozessorprogramms vorzugsweise als Zustandsmaschine mit je einem Hauptzustand pro Pulsmuster-Kategorie und diversen Unterzuständen je Pulsmuster Kategorie implementiert. Beispielhaft ist dies anhand der beigefügten Figuren 14, 15 und 16 für jeweils ein Pulsverfahren dargestellt.

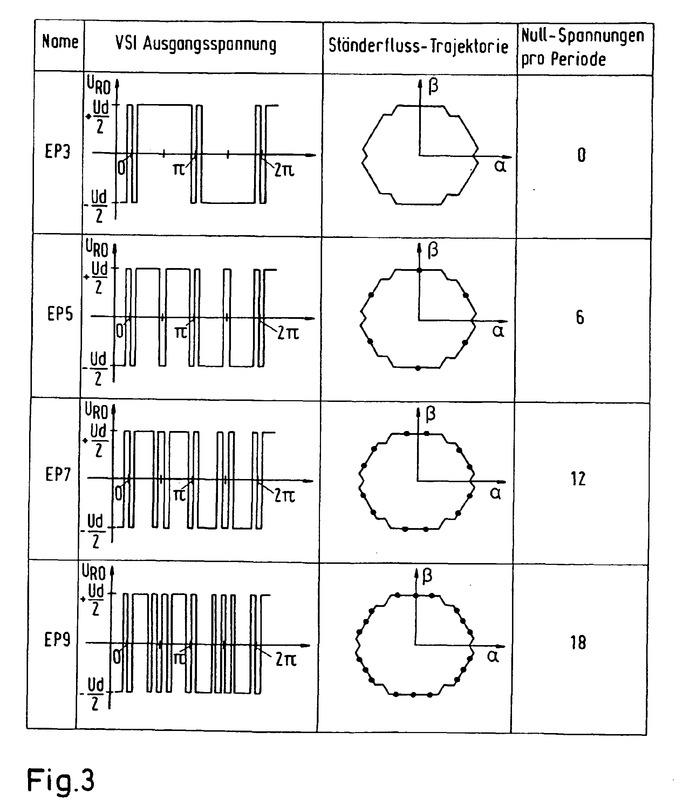

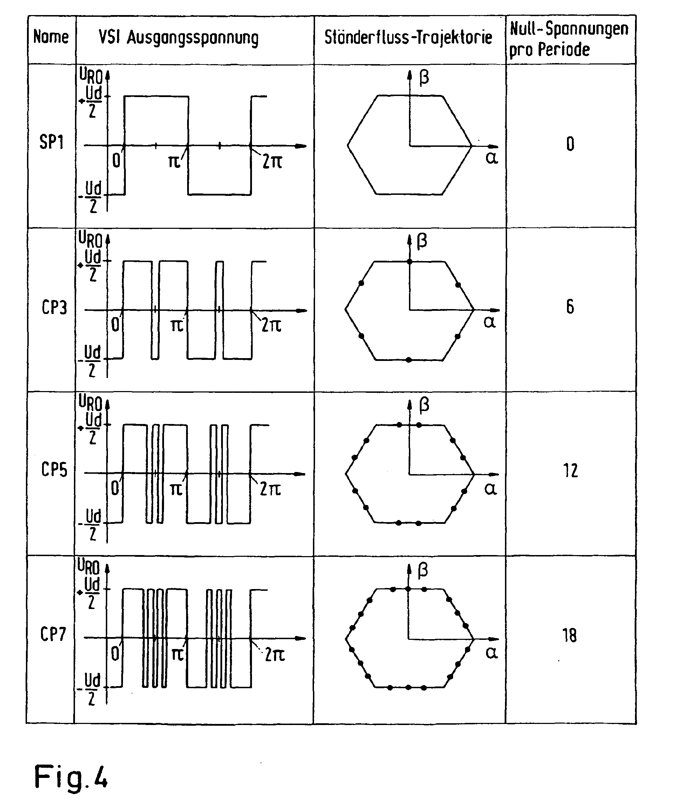

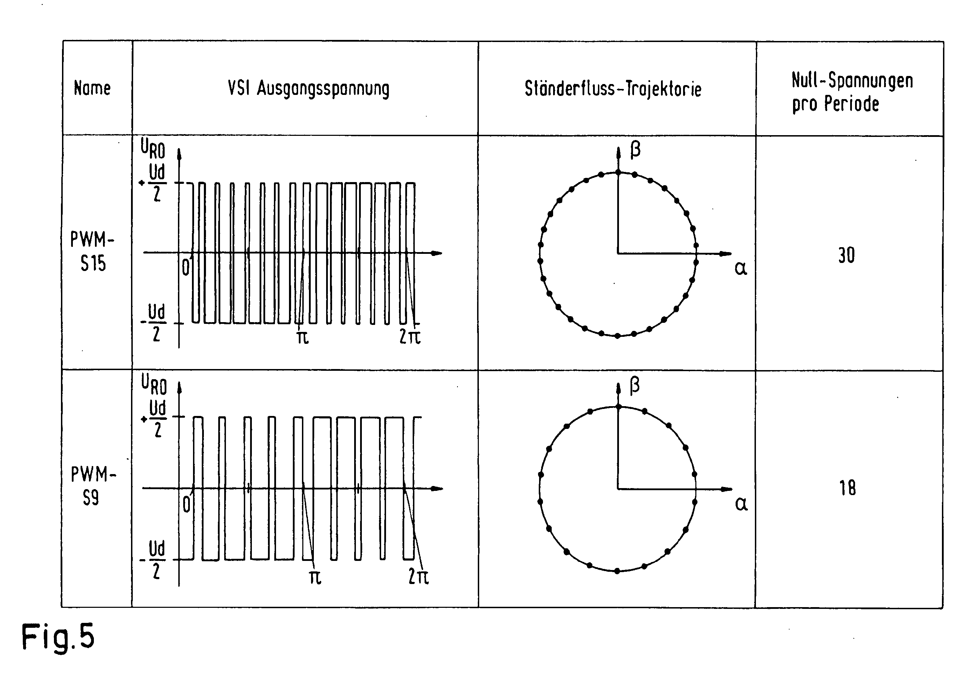

Fig. 3 bis 5 zeigen Pulsmuster in den Kategorien mittelwert-basiert (Fig. 5 zeigt speziell PWM-Pulsmuster) und augenblickswert-basiert (Fig. 3 und 4). In allen drei Figuren ist eine Mehrzahl verschiedener Pulsmuster der jeweiligen Kategorie dargestellt. Die Figuren sind jeweils tabellenförmig gestaltet, wobei in der ersten Spalte der Name bzw. die Abkürzung für das Pulsmuster steht, wobei in der zweiten Spalte der prinzipielle zeitliche Verlauf der Ständerspannung für eine einzelne Phase dargestellt ist, wobei die Ständerspannung zwischen Ihrem momentanen Maximalwert $+U_{DC}/2$ und Ihrem momentanen Minimalwert $-U_{DC}/2$ hin und her geschaltet werden kann, wobei in der dritten Spalte die auf ein Koordinatensystem des Ständers bezogene Ständerflusstrajektorie dargestellt ist und wobei in der vierten Spalte die Anzahl der in einer Periode (d.h. bei einem Umlauf der Spitze des Ständerfluss-Zeigers im Gegenuhrzeigersinn auf der Ständerfluss-Figur) geschalteten Nullspannungen angegeben ist. Dabei dreht sich der Ständerfluss-Zeiger um den Ursprung des Koordinatensystems und die Nullspannungen sind durch kleine schwarze Kreise auf der Ständerfluss-Figur dargestellt, d. h. es wird eine Nullspannung geschaltet, wenn die Spitze des Ständerfluss-Zeigers den Kreis erreicht.

Die Schaltwinkel der entsprechenden, synchronen Pulsungen können, soweit der Freiheitsgrad der Schalthandlungen dies erlaubt, nach verschiedenen Optimierungskriterien, wie minimaler Effektivwert des Oberschwingungsstromes oder minimale Pendelmomente bzw. Netzrückwirkungen, offline optimiert werden. Die z.B. jeweils in Tabellenform abgespeicherten Schaltwinkel (s. auch Figur 14 und 15) stellen die Basis des flussgeführten Modulators dar.

Fig 14 zeigt für einen Sektor der Flusstrajektorie bei synchroner 7-fach Taktung mit eingeklappten Ecken (Hauptzustand EP7) die bereits erwähnten Unterzustände der Zustandsmaschine und deren Zuordnung zum jeweiligen Teilabschnitt der Ständerflusstrajektorie für mathematisch positive Drehrichtung.

Fig 15 zeigt für einen Sektor der Flusstrajektorie bei synchroner 5-fach Taktung ohne eingeklappte Ecken (Hauptzustand CP5) die bereits erwähnten Unterzustände der Zustandsmaschine und deren Zuordnung zum jeweiligen Teilabschnitt der Ständerflusstrajektorie für mathematisch positive Drehrichtung.

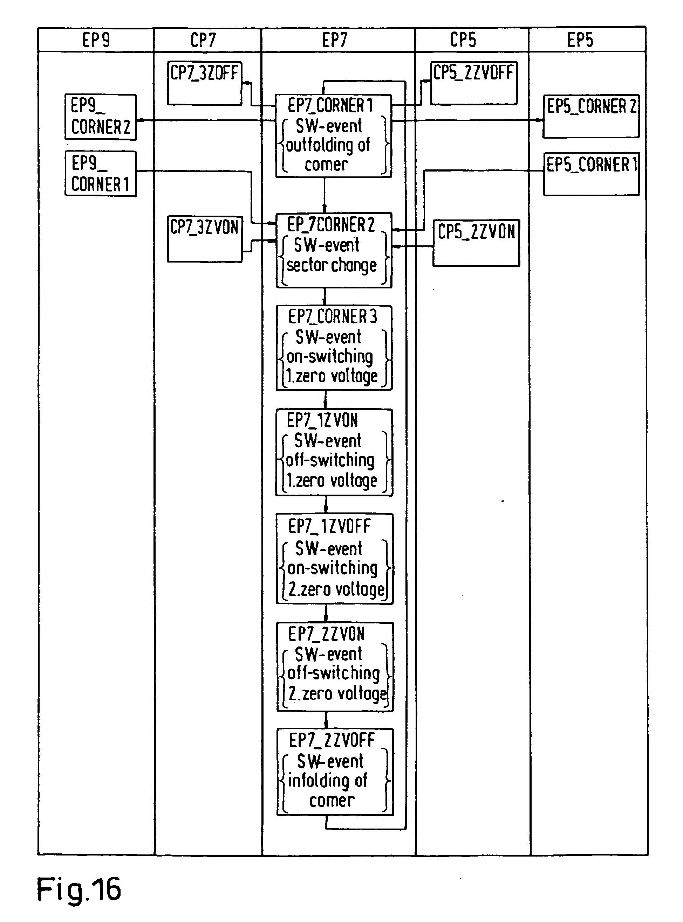

Fig. 16 zeigt am Beispiel der synchronen 7-fach Taktung mit eingeklappten Ecken das Zustandsübergangsdiagramm inklusive der Wechselzustände in bzw. aus unmittelbar angrenzenden Pulsverfahren.

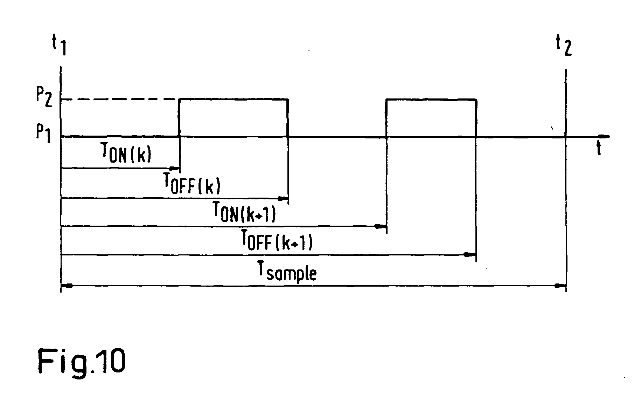

Pro Unterzustand können unter zu Hilfenahme weiterer, später beschriebener Merkmale der Erfindung (s. Figur 10) bis zu vier in der Zukunft liegende Schalthandlungen berechnet werden.

Die vorgenannten vorteilhaften Ausführungsformen der Erfindung ermöglichen eine rechenzeitoptimale Abarbeitung innerhalb des Echtzeitsystems seinerseits sowie die einfache Erweiterbarkeit andererseits.

So kann beispielsweise in einer weiteren vorteilhaften Ausführungsform des Verfahrens bei hochdynamischen Änderungen der Zwischenkreisspannung und/oder der Drehzahl zur Vermeidung von Momentanstromabschaltungen schnellstmöglich zwecks Schaltung von dynamischen Nullspannungen auf einfacher Weise in die bekannten Verfahren DSR oder DSR mit Eckeneinklappung (d.h. die Ständerflusstrajektorie ist kein Sechseck wie in Fig. 4 dargestellt, sondern verläuft an den Stellen, an denen bei der DSR die Ecken liegen, von der Kante des Sechsecks geradlinig einwärts und dann wieder geradlinig auswärts bis zu der Kante des Sechsecks, siehe Fig. 3) umgeschaltet werden.

Die augenblickswert-basierte, synchrone Pulsgenerierung erfolgt über Komparation einer gemäß der vorgegebenen Schaltwinkel berechneten Soll-Ständerflusstrajektorie und einem modifizierten Istwert der über den Flussbeobachter ermittelten Ständerflusstrajektorie.

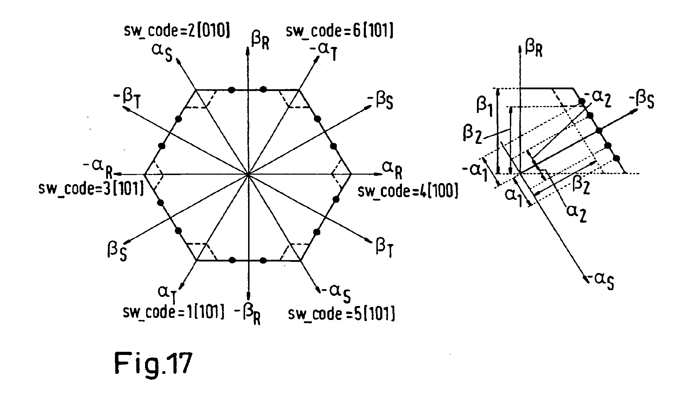

Vorteilhaft können hierzu die in Fig. 17 dargestellten Projektionen der Ständerflusstrajektorie verwendet werden, so dass die erfindungsgemäße Komparation der Flüsse (Basis der ständerflussgeführten Pulsgenerierung) innerhalb der Zustandsmaschine nur für einen Sektor programmiert werden braucht.

Die bei anderen Verfahren (siehe z.B. WO 2005/018086) erforderliche und z. T. aufwendige Berechnung eines fiktiven Klemmflusses wird über die unten stehende Kompensation der last- und widerstandsabhängige Ständerfluss-Eindrehung vermieden.

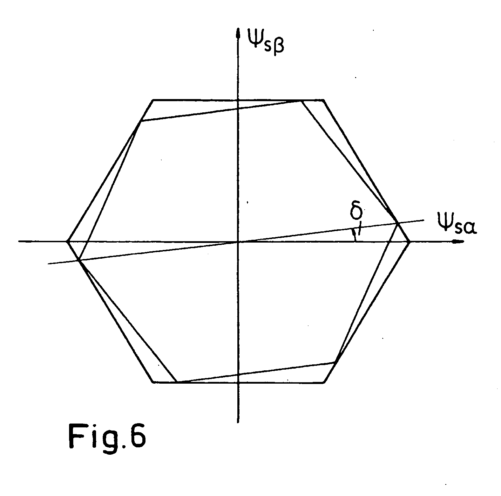

Fig. 6 zeigt die eingedrehte Flussfigur, die um den Winkel $\delta$ im Gegenuhrzeigersinn gegen die durch die Kompensation korrigierte Flussfigur verdreht ist.

Der Istwert des Ständerflussraumzeigers wird vor der Projektion auf die in Figur 17 dargestellten Projektionsachsen mit dem Korrekturwinkel (hier beispielhaft für positive Drehrichtung dargestellt) gemäß unten stehenden Gleichungen [4] in den Koordinatenursprung zurückgedreht.

$$u_{Sd}^{SFO} \approx R_S i_{Sd}^{SFO}$$

$$u_{Sq}^{SFO} = R_S i_{Sq}^{SFO} + u_{mq}^{'} = R_S i_{Sq}^{SFO} + \omega_{FS} \cdot \gamma \cdot \psi_{S\_ref}$$

$$\left| \underline{u}_S \right| = \sqrt{\left( u_{Sd}^{SFO} \right)^2 + \left( u_{Sq}^{SFO} \right)^2}$$

$$\cos(\varepsilon_U) = \frac{u_{Sd}^{SFO}}{\left| \underline{u}_S \right|} \quad ; \quad \sin(\varepsilon_U) = \frac{u_{Sq}^{SFO}}{\left| \underline{u}_S \right|}$$

$$\cos(\delta) = \cos(\frac{\pi}{2} - \varepsilon_U) = \sin(\varepsilon_U) = \frac{u_{Sq}^{SFO}}{\left| \underline{u}_S \right|}$$

$$\sin(\delta) = \sin(\frac{\pi}{2} - \varepsilon_U) = \cos(\varepsilon_U) = \frac{u_{Sd}^{SFO}}{\left| \underline{u}_S \right|}$$

$$[4]$$

Die flussgeführte Schaltzeitenberechnung erfolgt unter Nutzung der untenstehenden Gleichungen für die einzeln aufgeführten Basisschalthandlungen:

Es wird nun ein Beispiel für die Berechnung der Zeitdauer bis zur Schaltung einer aktiven Spannung (s.g. Außenspannung), siehe auch Fig. 17 sw_code=1...6, beschrieben. Der im Folgenden erläuterte Algorithmus wird für die Schaltzeit-Berechnungen wie

- Zeit bis zum Sektorwechsel (CP-Verfahren, siehe z. B. Fig. 4)
- Zeit bis zum Einklappen einer Ecke (EP-Verfahren, wie z. B. Fig. 3)
- Zeit bis zum Ausklappen einer Ecke (EP-Verfahren, wie z. B. Fig. 3) angewendet.

$$\psi_{\beta\_ref} = \gamma \cdot \psi_{S\_ref} \cdot \beta_N \left(\left|a_{ref}\right|\right) \quad ; \quad N = 1,2$$

$$dt = \frac{3}{\pi \cos(\frac{\pi}{6})} \frac{1}{U_{mq\_max}} (\psi_{\beta\_ref} - \psi_{\beta\_x}) \quad ; \quad x = L1, L2, L3, NL1, NL2, NL3 \qquad [5]$$

Die jeweiligen β-Fluss-Schwellwerte sind für jedes Pulsmuster als Funktionen der Sollaussteuerung und der jeweiligen Schalthandlung (Sektorwechsel oder Eckenmodulation) in Tabellenform gespeichert. Die für den momentanen Flussvektor (L1, L2, L3, NL1, NL2, NL3) verwendete Transformation (s. Fig. 17) hängt von dem momentanen Sektor des Ständerflusses und der Drehrichtung ab. Die Variable $U_{mq\_max}$ bezeichnet die momentane, maximale Magnetisierungsspannung der Induktionsmaschine gemäß der vorgenannten Gleichung.

Im Folgenden wird die Berechnung der Nullspannungen erläutert. Wie aus Fig. 17 ersichtlich ist, werden die Schaltereignisse "Nullspannung EIN" (in der Figur als Punkte bzw. kleine Kreise dargestellt) durch die α-Fluss-Schwellwerte bestimmt. Abhängig von der Anzahl von Nullvektoren pro Pulsmuster werden unterschiedliche Fluss-Schwellwerte verwendet. Tabelle 1 zeigt die Zuordnung der Pulsmuster und der Schaltwinkel der Nullvektoren zu der Anzahl von Nullvektoren pro Sektor.

Tabelle 1

| Anzahl von Nullvektoren pro Sektor | Pulsmuster | verwendeter Nullvektor-Winkel |
|---|---|---|
| 1 | CP3, EP5 | Null |
| 2 | CP5, EP7 | $\alpha_1$; $-\alpha_1$ |
| 3 | CP7, EP9 | $\alpha_1$; null; $-\alpha_1$ |

Die so genannte innere α-Fluss-Schwelle $\alpha_2$ (s. Fig. 17) wird durch die in den vorteilhaften Ausführungsformen beispielhaft angegebenen Pulsungen (s. Fig.3 und Fig. 4) nicht genutzt bzw. nimmt den trivialen Wert 0 an, weil die maximale Anzahl von Nullspannungen pro Sektor im Fall der Pulsmuster CPx (x=3, 5, 7) oder EPy (y = 3, 5, 7, 9) kleiner gleich drei ist. Die innere Flussschwelle $\alpha_2$ würde in einer weiteren, nicht näher ausgeführten, Ausführungsform bspw. Pulsmuster CP9 in logischer Weiterführung der Darstellung in Fig.4 Anwendung finden.

Der folgende Algorithmus wird für die Berechnung der Schaltzeit bis zum nächsten Ereignis "Nullspannung EIN" verwendet. Der Algorithmus ist für beide näher ausgeführten Pulsverfahren CP (center pulsing) und EP (edge pulsing) gültig:

$$\psi_{\alpha\_ref} = \gamma \cdot \psi_{S\_ref} \cdot \alpha_N \left(\left|a_{ref}\right|\right) \quad ; \quad N = 1,2$$

$$dt = -\frac{3}{\pi} \frac{1}{U_{mq\_max}} (\psi_{\alpha\_ref} - \psi_{\alpha\_x}) \quad ; \quad x = L1, L2, L3, NL1, NL2, NL3 \qquad [6]$$

Die jeweiligen α-Fluss-Schwellwerte sind für jedes Pulsmuster als Funktionen der Sollaussteuerung und der jeweiligen Schalthandlung (jeweilige Nummer der Nullspannung) in Tabellenform gespeichert Die für den momentanen Flussvektor (L1, L2, L3, NL1, NL2, NL3) verwendete Transformation hängt von dem momentanen Sektor des Ständerflusses und der Drehrichtung ab. Die Variable $\left|\underline{u}'_{mq}\right|_{max}$ bezeichnet die momentane, maximale Magnetisierungsspannung der Induktionsmaschine gemäß der vorgenannten Gleichung.

Es wird nun die Berechnung der Zeit für "Nullspannung AUS" beschrieben. Die folgende Vorschrift zur Berechnung der Schaltzeit *dt* bis zum nächsten Ereignis "Nullspannung AUS" wird bei beiden Pulsverfahren, CP und EP, verwendet:

$$dt = \frac{\varphi_{ZV}\left(\left|a_{ref}\right|\right)}{\omega_{s\_ref}} \qquad\qquad [7]$$

Der verwendete Nullspannungswinkel $\varphi_{ZV}$ ist für jedes Pulsmuster als Funktionen der Sollaussteuerung und der jeweiligen Schalthandlung (jeweilige Nummer der Nullspannung) in Tabellenform gespeichert.

Die jeweils in Tabellen gespeicherten, vorgenannten Schaltwinkel können offline nach verschiedenen Optimierungskriterien, wie bspw. minimaler Effektivwert des Oberschwingungsstromes oder minimale Pendelmomente bzw. Netzrückwirkungen berechnet werden und aufgrund der gewählten Struktur der Pulsmustergenerierung einfach durch andere Sets ausgetauscht werden.

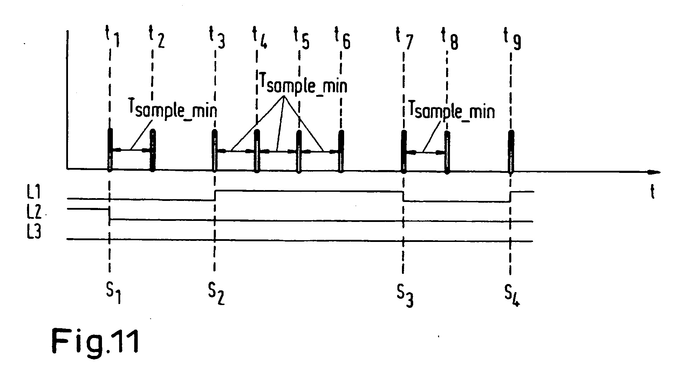

Die im Folgenden anhand von Fig. 10 und Fig. 11 beschriebenen Ausführungsbeispiele beziehen sich auf die beiden Aspekte der Erfindung, gemäß denen mehrere Schalthandlungen im Voraus berechnet werden und abgespeichert werden bzw. längere Zeitintervalle zwischen Schalthandlungen für eine Wiederholung der Abtastung und Berechnung der Schaltzeitpunkte genutzt werden. Diese Aspekte sind besonders geeignet für Pulsmuster bei der augenblickswertbasierten Steuerung eines Stromrichters gemäß vorgegebenen Ständerfluss-Trajektorien. Durch die unten beschriebenen Verfahren kann die Abtastzeit der Regelung größer als die Mindestschaltzeit der Wechselrichterphasen bei gleichzeitiger maximaler Spannungsausnutzung des Wechselrichters gewählt werden. Die folgenden Ausführungsbeispiele beziehen sich auf einen solchen Fall.

In Fig. 10 ist die von links nach rechts verlaufende Zeitachse mit einem kleinen t bezeichnet. Zwei lange, von oben nach unten verlaufende Striche, die die Zeitachse kreuzen, definieren zwei Abtastzeitpunkte $t_1$ und $t_2$, die unmittelbar aufeinander folgen, d.h. es finden keine weiteren Abtastungen und Berechnungen zwischen diesen beiden Zeitpunkten statt. In einem vor dem Zeitpunkt $t_1$ ausgeführten Berechnungszyklus wurden zwei Schaltzyklen (mit jeweils zwei Schaltaktionen pro Zyklus) zum Schalten derselben Phase eines Stromrichters berechnet und zum Zeitpunkt $t_1$ in entsprechende Register geschrieben. Das Zeitintervall zwischen den beiden Abtastzeitpunkten, die in Fig. 10 dargestellt sind, ist mit $T_{sample}$ bezeichnet. Innerhalb dieses Abtast-Zeitintervalls kann lediglich ein einziger neuer Berechnungszyklus zur Berechnung der Schaltzeitpunkte nach dem Zeitpunkt $t_2$ durchgeführt werden. Die zwei vorher berechneten Schaltzyklen kommen daher während des Abtastzeitintervalls zur Ausführung. Fig. 10 betrifft lediglich eine der drei Phasen. Für die anderen beiden Phasen können in entsprechender Weise Schaltzyklen berechnet werden. Darüber hinaus können mit dem beschriebenen Verfahren ebenfalls zwei Schaltzyklen ausgehend von einer eingeschalteten Phase realisiert werden. Fig. 10 zeigt beispielhaft nur eine Abfolge ausgehend von einer ausgeschalteten Phase am Beginn der Abtastzeit.

Jeder der Schaltzyklen ist in Fig. 10 durch ein Rechtecksignal definiert, wobei der Zeitpunkt des Beginns des Rechtecksignals jeweils um eine Zeitspanne $T_{ON}$ nach dem Beginn des Abtastzeitintervalls liegt. Dabei ist der erste Schaltzyklus durch den zusätzlichen Index k bzw. der zweite Schaltzyklus durch den zusätzlichen Index k+1 bezeichnet. Im Ausführungsbeispiel wird daher zum Zeitpunkt $t_1$ für jeden dieser insgesamt vier Schaltaktionen ein Register mit einem Wert beladen, der dem jeweiligen Zeitpunkt entspricht. Zum Zeitpunkt $T_{ON(k)}$ wird die Phase z. B. von dem niedrigen Potenzial des Zwischenkreises auf das hohe Potenzial des Zwischenkreises umgeschaltet. Zum Zeitpunkt $T_{OFF(k)}$ wird die Phase dann wieder auf das niedrige Potenzial zurück geschaltet, usw.. Dem hohen Potenzial entspricht in Fig. 10 der höhere Wert $P_2$ der dargestellten Rechteck-Zustandskurve, wie eine Funktion der Zeit ist. Dem niedrigen Potenzial entspricht der niedrigere Wert $P_1$.

Zur Ausführung der Schaltaktionen wird beispielsweise zum Zeitpunkt $T_{ON(k)}$ das erste Ventil der Reihenschaltung von zwei Ventilen für die Schaltung der Phase umgeschaltet. Das zweite Ventil derselben Reihenschaltung wird dann später, entsprechend der Verriegelungszeit umgeschaltet.

Anders als in Fig. 10 dargestellt ist, kann innerhalb des Abtast-Zeitintervalls ein Schaltzyklus auch unvollständig ausgeführt werden,

Fig. 11 zeigt ebenfalls einen Zeitablauf bei der Steuerung eines Stromrichters. Wiederum ist die Zeitachse mit t bezeichnet. Oberhalb der Zeitachse sind mehrere Abtastzeitpunkte jeweils durch einen senkrechten, dicken Strich markiert. Insgesamt sind neun Abtastzeitpunkte $t_1$ bis $t_9$ dargestellt. Außerdem sind unterhalb der Zeitachse die Schaltzustände aller drei Phasen eines Dreiphasenwechselrichters dargestellt. Die Phasen sind mit L1, L2 und L3 bezeichnet. In dem dargestellten Zeitraum finden jedoch nur Umschaltungen der Phasen L1 und L2 statt.

Außerdem sind noch diejenigen Zeitpunkte mit längeren, von oben nach unten verlaufenden unterbrochenen Linien markiert, zu denen Schalthandlungen vorgenommen werden. Diese insgesamt vier dargestellten Schaltzeitpunkte $S_1$ bis $S_4$ fallen jeweils mit einem der Abtastzeitpunkte $t_1$ bis $t_9$ zusammen, nämlich mit den Abtastzeitpunkten $t_1$ (Schaltzeitpunkt $S_1$), $t_3$ (Schaltzeitpunkt $S_2$) $t_7$ (Schaltzeitpunkt $S_3$) und $t_9$ (Schaltzeitpunkt $S_4$). Diese Schaltzeitpunkte sind daher so genannte gemeinsame Zeitpunkte im Sinne der obigen Beschreibung.

Anders als in dem in Fig. 11 dargestellten Fall kann es auch vorkommen, dass zwischen zwei gemeinsamen Zeitpunkten ein weiterer Schaltzeitpunkt liegt, wie es beispielsweise in dem Ausführungsbeispiel gemäß Fig. 10 der Fall ist.

Gemäß dem hier beschriebenen Ausführungsbeispiel wird bei der Steuerung eines Stromrichters für ein Zeitintervall zwischen zwei gemeinsamen Zeitpunkten jeweils geprüft, ob dieses Zeitintervall größer oder gleich der doppelten Länge eines Mindest-Abtastzeitintervalls $T_{sample\_min}$ ist. Wenn dies der Fall ist, wird der nächstfolgende Abtastzeitpunkt nach dem Beginn des Zeitintervalls, das durch die beiden gemeinsamen Zeitpunkte definiert ist, auf das Ende des Mindest-Abtastzeitintervalls festgelegt, welches zum Beginn des Zeitintervalls der gemeinsamen Zeitpunkte beginnt. Im Fall von Fig. 11 ist dies bei allen drei dargestellten Zeitintervallen der Fall. Keines der Zeitintervalle zwischen den gemeinsamen Zeitpunkten $S_1$ bis $S_4$ ist kleiner als das Mindest-Abtastzeitintervall. Während des ersten Mindest-Abtastzeitintervalls wird nun ein Berechnungszyklus zur Berechnung zukünftiger, nach dem nächstfolgenden Abtastzeitpunkt liegender Schaltzeitpunkte durchgeführt. Diese ersten Berechnungszyklen innerhalb der Zeitintervalle zwischen den gemeinsamen Zeitpunkten finden im Fall der Fig. 11 also zwischen den Zeitpunkten $t_1$ und $t_2$, den Zeitpunkten $t_3$ und $t_4$ und den Zeitpunkten $t_7$ und $t_8$ statt. Am Ende dieser ersten Mindest-Abtastzeitintervalle, also zu den Zeitpunkten $t_2$, $t_4$ und $t_8$, findet eine erneute Abtastung der für einen folgenden Berechnungszyklus erforderlichen Messsignale statt, werden die soeben berechneten Schaltzeitpunkte z. B. in die Register der Compare-Capture-Unit (siehe oben) geschrieben und danach beginnt ein neuer Berechnungszyklus. Im Fall der Zeitintervalle $S_1$ bis $S_2$ und $S_3$ bis $S_4$ ist dies der letzte Berechnungszyklus, da nicht mehr als ein weiteres Mindest-Abtastzeitintervall in das jeweilige Intervall hineinpasst. Im Fall des Intervalls $S_2$ bis $S_3$ passen jedoch noch drei weitere Mindest-Abtastzeitintervalle in unmittelbarer Folge hintereinander in das Intervall, so dass noch weitere Berechnungszyklen und jeweils am Ende des Mindest-Abtastzeitintervalls Abtastungen vorgenommen werden. Der zweite Berechnungszyklus innerhalb des Intervalls $S_2$ bis $S_3$ beginnt daher zum Zeitpunkt $t_4$, der dritte zum Zeitpunkt $t_5$. Nach dem Zeitpunkt $t_6$ verbleibt nicht mehr als ein weiteres Mindest-Abtastzeitintervall bis zu dem gemeinsamen Zeitpunkt $S_3$, sodass kein weiterer Berechnungszyklus durchgeführt wird.

Wenn nach einem Abtastzeitpunkt (hier $t_2$, $t_6$ und $t_8$) nicht mehr zwei weitere Mindest-Abtastzeitintervalle in ein Zeitintervall hineinpassen, wird lediglich noch ein Berechnungszyklus ausgeführt, bis der gemeinsame Zeitpunkt $S_2$, $S_3$ bzw. $S_4$ erreicht ist, der das Ende des Zeitintervalls definiert. Die Länge des letzten Abtastzeitintervalls ist daher in der Regel größer als die Länge des Mindest-Abtastzeitintervalls.

Es soll angemerkt werden, dass der in Fig. 11 dargestellte Fall nicht von vornherein, zum Zeitpunkt $t_1$, feststeht. Vielmehr ist die Folge der einzelnen in Fig. 11 dargestellten Abtastzeitintervalle und auch die Folge der gemeinsamen Zeitpunkte $S_1$ bis $S_4$ das Ergebnis der Folge von konkret durchgeführten Berechnungszyklen. In jedem Berechnungszyklus wird erst festgelegt, welche nach dem nächstfolgenden Abtastzeitpunkt liegenden Schalthandlungen ausgeführt werden. Dadurch ist die gesamte Steuerung der Schaltzeiten aktuell und basiert jeweils auf den am Beginn des Berechnungszyklus erhaltenen Abtastwerten.

Figur 9 zeigt ein beispielhaft dargestelltes Signalflussbild einer speziellen, vorteilhaften Ausführungsform der Sollspannungsberechnung des o. g. Regelverfahrens mit mittelwert-basierter Pulsmustergenerierung und Dead-Beat-Verhalten der Ständerflussregelung.

Die dargestellte Struktur kann erfindungsgemäß sowohl für asynchrone als auch für synchrone mittelwert-basierte Pulsverfahren unterschiedlicher Gangzahl verwendet werden. In der näher beschriebenen vorteilhaften Ausführungsform werden lediglich asynchrone und synchrone Pulsungen mit den Gangzahlen 15 und 9 betrachtet. Die Struktur kann jedoch in einer nicht näher ausgeführten weiteren vorteilhaften Aussführungsform auch für mittelwertbasierte Taktungen kleinerer Gangzahl (7-, 5-, 3-fach Taktung inkl. Blocktaktung) sowie höherer Gangzahl (z. B. 21-fach Taktung) eingesetzt werden. Die Vorteile der weiter unten beschriebenen Dead-Beat Flussregelung gelten für alle genannten Taktungen.

Das in Fig. 9 dargestellte Flussdiagramm weist einen oberen Zweig auf, der als Eingangsgröße das Produkt aus Ständerflusssollwert $\Psi_{S\_ref}$ und Feldschwächziffer $\gamma$ der Regelung erhält. Der skalare Sollwert wird mit dem Richtungsraumzeiger des an das Ende der aktuellen Pulsperiode prädizierten Ständerflussraumzeigers multipliziert (Block 91). Das Ergebnis der Multiplikation wird in Block 92 mit dem Ergebnis eines anderen Zweiges für die zu stellende Winkeldifferenz des Ständerfluss-Zeigers multipliziert. Durch Differenzbildung 93 mit dem prädizierten Ständerflussraumzeigers wird ein Zwischenergebnis erhalten, welches in Block 94 durch die Dauer des nächsten Abtastzyklus (nächste Pulsperiode) $T_P$ dividiert wird.

Nachfolgend wird das Ergebnis der Division durch einen Addierer 95 zu dem Produkt (Block 96) des Ständerwiderstandes $R_s$ und des Ständerstroms $i_s$ hinzu addiert.

Das Ergebnis der Addition wird in Block 97 durch die gefilterte Zwischenkreisspannung $U_{DC\_f1}$ dividiert, sodass als Endergebnis, der Aussteuerungsgrad-Vektor $\underline{a}_{S\_ref}$, erhalten wird. Dieser Vektor bzw. dessen Komponenten können z. B. die Ausgangsgrößen der Regelung von Einrichtung 4 (Fig. 2) sein, die an die Pulsmustergenerierung B übergeben werden. Die Multiplikations-Operation in Block 97 (Fig. 9) kann jedoch auch von der Pulsmustergenerierung B vorgenommen werden, sodass auch der zu stellende Ständerspannungs-Sollwert-Vektor $\underline{u}_{S\_ref}$ bzw. dessen Komponenten die Ausgangsgrößen der Regelung von Einrichtung 4 sein können.

Der untere Zweig des Flussdiagramms weist in dem Ausführungsbeispiel drei Eingangsgrößen auf, wobei zwei der Eingangsgrößen alternativ verwendet werden. Im ersten Fall sind die Schaltglieder der dargestellten Blöcke 101, 104, 106 wie in Fig. 9 dargestellt in der unteren Stellung. Dieser Fall betrifft den zu der Ständergrundfrequenz asynchronen Betrieb mit mittelwert-basierten Pulsmustern..

Eingangsgrößen des unteren Zweiges sind in diesem Fall die Ständerfrequenz $\omega_s$ und der Kehrwert der Pulsperiode $T_{p,asyn}$. Aus diesem Kehrwert wird durch erneute Kehrwertbildung (Block 102) und anschließende Multiplikation (Block 103) mit der Ständerfrequenz die Differenz der Winkelposition für die Berechnung des neuen Ständerfluss-Zeigers berechnet. Diese Winkeldifferenz wird in Block 105 auf die aktuelle Position des Zeigers bezogen und Block 92 zugeführt. Außerdem wird der Kehrwert der Pulsperiode $T_{p,asyn}$ über Schaltglied 106 dem Block 94 zugeführt.

Im zweiten Fall, der dem Betrieb bei synchroner PMW entspricht, nehmen die Schaltglieder 101, 104, 106, anders als in Fig. 9 dargestellt, ihre obere Schaltposition ein. Eingangsgrößen sind in diesem Fall die Differenz der Winkelpositionen des Ständerfluss-Zeigers über den Regelungszyklus oder, alternativ, die neue Soll-Winkelposition, die der Ständerfluss-Zeiger am Ende des Regelungszyklus, zum nächsten Abtastzeitpunkt einnehmen soll, sowie wiederum die Ständer-Rotationsfrequenz. Durch Kehrwertbildung der Winkelpositionsdifferenz in Block 102 und anschließende Multiplikation mit der Ständer-Rotationsfrequenz in Block 103 wird der Kehrwert der Dauer des Abtastzyklus für den synchronen Fall gebildet und über das Schaltglied 106 dem Block 94 zugeführt. Außerdem wird die Winkelpositionsdifferenz über das Schaltglied 104 wiederum Block 105 zugeführt, dessen Ergebnis Block 92 zugeführt wird.

Die in Fig. 9 dargestellte Struktur ist insbesondere in Software implementiert, sodass die Blöcke, Addierer, Subtrahierer, Dividierer und Schaltglieder nicht in Hardware vorliegen müssen.

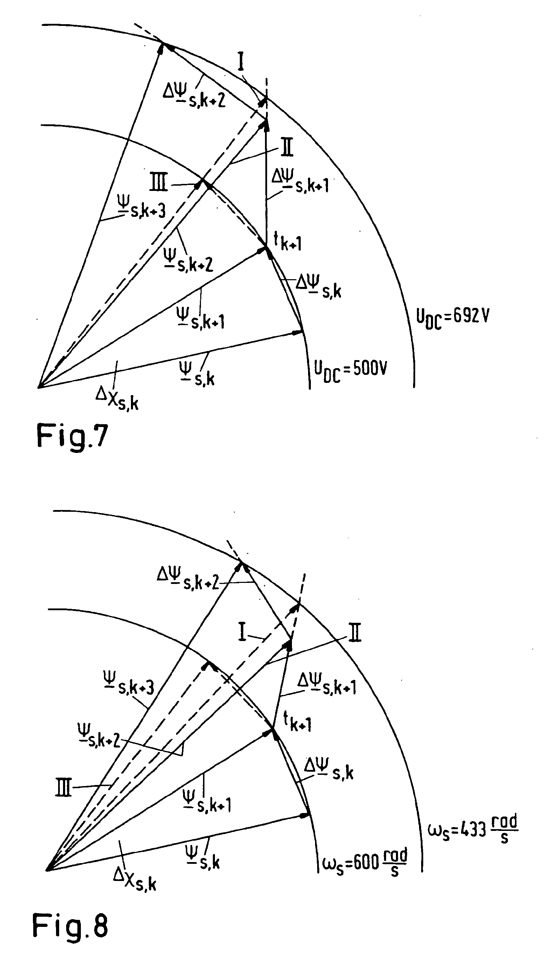

Die erfindungsgemäßen Vorteile der bereits in Fig. 9 dargestellten Dead-Beat Flussregelung sollen anhand der beiden in Fig. 7 und Fig. 8 exemplarisch dargestellten Gedankenexperimente erläutert werden.

Fig. 7 zeigt das Verhalten des Ständerflussraumzeigers in einem ortsfesten, auf den Ständer bezogenen Koordinatensystem bei asynchronen mittelwert-basierten Pulsungen im Feldschwächbetrieb, wenn die Zwischenkreisspannung sprungartig ansteigt. In der Figur ist jeweils der Ständerfluss $\Psi_{s,k}$, $\Psi_{s,k+1}$, usw. durch einen vom Ursprung des Koordinatensystems ausgehenden Pfeil dargestellt. Dabei handelt es sich jeweils um den Ständerfluss, der an dem Abtastzeitpunkt zu Beginn eines Regelungszyklus gültig ist. Zu Beginn des k-ten Regelungszyklus ist der Ständerfluss bei einer Zwischenkreisspannung $U_{DC}$ von 500 V dargestellt. Bei der Abtastung zu Beginn dieses Zyklus wird diese Zwischenkreisspannung gemessen. Während des k-ten Regelungszyklus wird der Ständerfluss in seinem Betrag daher nicht geändert und lediglich die Rotation $\Delta\Psi_{s,k}$ des Zeigers um die Winkeldifferenz $\Delta X_{s,k}$ gestellt. Gemäß einer bevorzugten Ausführungsform der Erfindung können dabei die Winkelpositionen $X_{s,k}$ und/oder Winkeldifferenzen $\Delta X_{s,k}$ des Ständerflussraumzeigers vorgegeben sein, z. B. in einer Tabelle abgelegt sein. Auf diese Weise kann in einfacher Weise eine Synchronisation der Rotation des Ständerfluss-Zeigers mit der Grundfrequenz erreicht werden.

In bestimmten Situationen kann jedoch auch eine Ausnahme gemacht werden und der Ständerflussraumzeiger auf eine von der vorgegebenen Winkelposition abweichenden Position gestellt werden bzw. um eine andere als die vorgegebene Winkeldifferenz rotiert werden. Eine solche Ausnahme ist in Fig. 7 und Fig.8 dargestellt.

Während des k-ten Regelungszyklus verändert sich die Zwischenkreisspannung sprungartig von 500 V auf 692 V. An dem Abtastzeitpunkt zu Beginn des k+1-ten Regelungszyklus wird daher diese Zwischenkreisspannung gemessen. Für die Regelstruktur bedeutet dies, dass sich die Feldschwächziffer $\gamma$ ebenfalls sprungartig ändert.

Mit einem konventionellen P-Regler würde das Ausregeln dieser Sollwertabweichung auf annähernd Null erst nach mehreren Rechenzyklen (Pulsperioden) abgeschlossen sein. Aufgrund der Arbeitsweise eines P-Reglers würde die Maschine dabei im Spannungsstellbereich betrieben werden und nicht, wie üblich bei Feldschwächung, mit konstanter, maximaler Aussteuerung. Dies ergibt sich aus der Tatsache, dass sich die Änderung des Ständerflusses und damit der Betrag der Sollspannung und damit letztendlich die Aussteuerung nicht danach richtet, bei welchem Wert die Aussteuerung maximal wird, sondern nach den Vorgaben des Schlupf- und Flussreglers.

Hinzukommt noch, dass bei einem Pulsmuster welches die verminderte Aussteuerung nicht stellen kann (z.B. Blocktaktung) der Ständerfluss zwangsläufig über seine geforderte Winkellage hinausläuft, wodurch es zu einem Winkelfehler des Ständerflussraumzeigers am Ende des k+1-ten Regelungszyklus kommt, worauf wiederum der Schlupffrequenzregler reagiert. Letztendlich kommt es dadurch zu dem bereits erwähnten Verlust der Steuerbarkeit.

Die erfindungsgemäße Regelstruktur dagegen fordert auf Grund ihres Dead-Beat-Verhaltens bereits in dem ersten Regelungszyklus nach dem Sprung (dem k+1-ten Regelungszyklus) eine Ständerflussänderung und damit eine Sollspannung, die größer oder gleich (optimal) der maximal möglichen Änderung des Ständerflusses und damit der Sollspannung ist. Aufgrund dieser Tatsache und der Tatsache, dass die Sollspannungen, bevor sie der mittelwert-basierten Pulsmustergenerierung zugeführt werden, winkelrichtig begrenzt werden, wird die Maschine in diesem Fall nicht im Spannungsstellbereich betrieben, sondern (wie bei Feldschwächung üblich) mit konstanter, maximaler Aussteuerung. Die oben beschriebenen Nachteile eines klassischen P-Reglers in Verbindung mit dem Spannungsstellbereich entfallen. Jedoch kommt es durch die winkelrichtige Begrenzung der Sollspannung zu einem Winkelfehler des Ständerflussraumzeigers am Ende des k+1-ten Regelungszyklus. Durch die erfindungsgemäße Regelstruktur wird jedoch auch dieser innerhalb einer minimalen Anzahl an Regelungszyklen (in Fig. 7 ist es ein Regelungszyklus) ausgeregelt.

In Fig. 7 sind dargestellt: der Zeiger III des Ständerflusses für den hypothetischen Fall, dass sich die Zwischenkreisspannung nicht ändert; der Zeiger I des Ständerflusses für den nicht erreichbaren Fall, dass die vorgegebene Winkelposition sofort mit dem gewünschten Ständerfluss-Betrag erreicht wird, und der tatsächlich eingestellte Zeiger II am Ende des k+1-ten Regelungszyklus.

Im Folgenden k+2-ten Regelungszyklus wird dann der Sprung in der Zwischenkreisspannung vollständig ausgeregelt und der Betrag des Ständerflusses erreicht den Wert, der der neuen Zwischenkreisspannung U = 692 V entspricht. Die Regelung bleibt stabil, da der Schlupffrequenzregler eingreift, indem er das Drehmoment konstant hält. Mit dem Ende des k+2-ten Regelungszyklus kann auch die Vorgabe der Zeiger-Winkelposition oder der Winkeldifferenz (über zwei Zyklen) wieder eingehalten werden.

Wie oben bereits erwähnt gelten diese Zusammenhänge für asynchronen mittelwert-basierten Pulsmuster-Betrieb. Bei synchronem mittelwert-basiertem Pulsmuster-Betrieb ist der Sachverhalt ähnlich, nur dass der oben beschriebene Winkelfehler des Ständerflussraumzeigers am Ende des k+1-ten Regelungszyklus nicht auftritt. Dies ergibt sich aus der Tatsache, dass die Pulsperiode nicht wie bei asynchronem Betrieb vorgegeben ist, sondern aus Ständerfrequenz und der Winkeldifferenz $\Delta Xs,k+1$ des Ständerflussraumzeigers im k+1-ten Regelungszyklus gemäß folgender Gleichung für jeden Regelungszyklus neu berechnet werden kann (s. auch Fig. 9):

$$T_p = \frac{\Delta\chi_{s,k+1}}{\omega_{s\_ref}} \qquad [8]$$

Das Fehlen eines zusätzlichen Synchronisationsreglers wirkt sich daher dreifach vorteilhaft aus: zum ersten wird die Komplexität der Regelstruktur verringert, zum zweiten greift kein weiterer Regler ein, der mit dem Schlupffrequenzregler um die Winkellage des Ständerflussraumzeigers konkurriert, was wiederum zu einer Destabilisierung der Regelung führen würde, und drittens ist eine sehr exakte Synchronisation mit der Grundfrequenz möglich, wobei nur bei dynamischen Änderungen Ausnahmen auftreten, die dann aber im nächsten Regelungszyklus wieder ausgeglichen werden.

Auch Fig. 8 zeigt das Verhalten des Ständerflussraumzeigers in einem ortsfesten, auf den Ständer bezogenen Koordinatensystem beim asynchronen mittelwert-basierten Pulsungen im Feldschwächbetrieb, wobei jedoch im k-ten Regelungszyklus ein Sprung der Drehzahl der Maschine von 600 auf 433 rad/s stattfindet.

Die Verhältnisse sind ähnlich wie bei Fig. 7, nur dass die Winkellagen des Ständerflussraumzeiger mit und ohne Änderung der Drehzahl der Maschine (nach dem Ausregeln) nicht mehr übereinander liegen, so wie sie es in Fig. 7 bei Änderung der Zwischenkreisspannung tun.

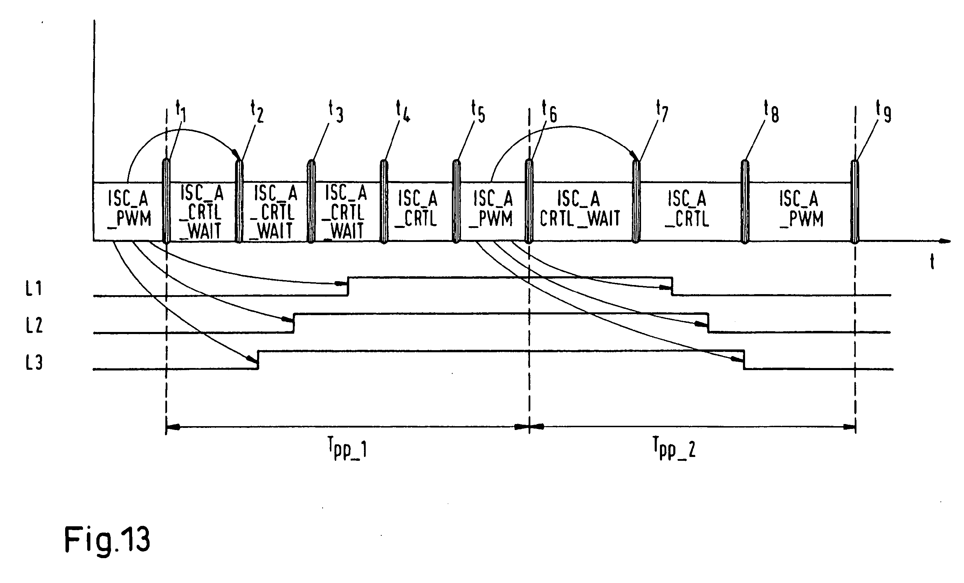

Fig. 13 zeigt ähnlich wie Fig. 11 einen Zeitablauf bei der Steuerung eines Stromrichters, jedoch mittels mittelwert-basierten Pulsmustern. Wiederum ist die Zeitachse mit t bezeichnet. Oberhalb der Zeitachse sind mehrere Abtastzeitpunkte jeweils durch einen senkrechten, dicken Strich markiert. Insgesamt sind neun Abtastzeitpunkte $t_1$ bis $t_9$ dargestellt. Außerdem sind unterhalb der Zeitachse die Schaltzustände aller drei Phasen des Stromrichters dargestellt. Die Phasen sind mit L1, L2 und L3 bezeichnet.

Außerdem sind in Fig. 13 zwei Pulsperioden $T_{pp\_1}$, $T_{pp\_2}$ dargestellt, wobei die erste Pulsperiode sich von dem Abtastzeitpunkt $t_1$ bis zu dem Abtastzeitpunkt $t_6$ und die zweite Pulsperiode sich unmittelbar anschließend bis zu dem Abtastzeitpunkt $t_9$ erstreckt. Über die beiden Pulsperioden hinweg wird jede Phase einmal eingeschaltet und einmal ausgeschaltet (wie dargestellt). Alternativ können die drei Phasen über die zwei Pulsperioden hinweg jeweils zunächst ausgeschaltet und dann eingeschaltet werden. In jedem Fall ist jeweils zu Beginn und zum Ende der Pulsperioden, d.h. zu den Abtastzeitpunkten $t_1$, $t_6$, $t_9$ eine Nullspannung geschaltet.

Gemäß der hier beschriebenen Ausführungsform ist ein Mindest-Abtastzeitintervall vorgegeben, welches dem in Fig. 11 dargestellten Tsample_min entspricht. Die aktuelle Pulsperiode der jeweiligen asynchronen oder synchronen mittelwert-basierten Pulsungen wird in ganzahlige Vielfache (mindestens jedoch drei Abtastintervalle mit jeweils mindestens Tsample_min) aufgeteilt.

Das letzte der Zeitintervalle innerhalb der Pulsperiode wird für Rechenaufgaben und Operationen genutzt, die unmittelbar für die Berechnung der mittelwert-basierten Pulsmuster (z. B. PWM Pulsmuster) auszuführen sind. Im dargestellten Fall sind dies die Zeitintervalle zwischen den Abtastzeitpunkten $t_5$ und $t_6$ bzw. $t_8$ und $t_9$. Diese Zeitintervalle sind in Fig. 13 mit "ISC_A_PWM" bezeichnet.

Ein Vorteil dieser Vorgehensweise besteht darin, dass die Pulsmuster jeweils auf Basis der aktuellsten Abtastwerte insbesondere der Zwischenkreisspannung berechnet werden können.

In dem unmittelbar vor dem Zeitintervall ISC_A_PWM liegenden Zeitintervall ISC_A_CRTL werden Rechenaufgaben und Operationen ausgeführt, die nicht unmittelbar der Berechnung der Pulsmuster dienen. Beispiele solcher Aufgaben sind die Sollspannungsberechnung gemäß Fig. 9.

Im dritten dargestellten Zeitintervall ISC_A_CTRL_WAIT werden üblicherweise Berechnungen durchgeführt, die nicht unmittelbar im vorletzten und letzten Abtastzyklus ausgeführt werden müssen, bspw. die Prädiktion des aktuellen Ständerflussraumzeigers ans Ende der aktuellen Pulsperiode, Mittelwertbildungen über Messwerte der vergangenen Pulsperiode.

**Patentansprüche**

1. Steuer- und/oder Regeleinrichtung zum Betreiben einer Asynchronmaschine (K), die von einem 3-Phasen-Stromrichter (G) gespeist wird,
**gekennzeichnet durch**
eine Steuer- und/oder Regelstruktur, oder kurz als die Struktur bezeichnet, (1, 2, 3, 4, 5, C, F), die

   - einen Schlupffrequenzregler (3) mit einem Ausgang aufweist, an dem der Schlupffrequenzregler (3) einen Sollwert ($W_{S\_ref}$, $W_{Fs}$) einer Ständerfrequenz der Asynchronmaschine ausgibt,
   - einen Ständerflussregler (R) und einen ersten Pulsmustergenerator (P) zur Erzeugung von mittelwert-basierten Pulssignalen aufweist, wobei

      a) die Struktur so nutzbar ist, dass der erste Pulsmustergenerator die mittelwert-basierten Pulssignale derart erzeugt, dass Schalthandlungen des 3-Phasen-Stromrichters (G) mit der Grundfrequenz der Rotation des Ständerfluss-Raumzeigers synchronisiert auftreten und somit synchrone Pulsmuster ergeben, und
      b) die Struktur so nutzbar ist, dass der erste Pulsmustergenerator die mittelwert-basierten Pulssignale derart erzeugt, dass Schalthandlungen des 3-Phasen-Stromrichters (G) asynchron zu der Grundfrequenz der Rotation des Ständerfluss-Raumzeigers sind und somit asynchrone Pulsmuster ergeben,

   wobei ein Ausgang des Ständerflussreglers (R) mit einem Eingang des Pulsmustergenerators (P) verbunden ist, sodass der Pulsmustergenerator (P) abhängig von einer Stellgröße, die von dem Ständerflussregler (R) erzeugt wird, die Pulssignale erzeugen kann, wobei der Ständerflussregler (R) ausgestaltet ist, die Stellgröße abhängig von einem Sollwert des Ständerflusses der Asynchronmaschine (K) und abhängig von einem Sollwert des Drehmoments der Asynchronmaschine (K) zu erzeugen, wobei der Ständerflussregler (R) ein Dead-Beat-Regelverhalten aufweist und wobei der Ausgang des Schlupffrequenzreglers (3) mit einem Eingang des Ständerflussreglers (R) verbunden ist, so dass der Sollwert ($W_{S\_ref}$, $W_{Fs}$) der Ständerfrequenz für die Erzeugung der Stellgröße eingeht,
   - einen zweiten Pulsmustergenerator (M), der mit einem Ausgang eines Ständerfluss-Beobachters (F) verbunden ist, um beim Betrieb der Asynchronmaschine mittels ständerflusstrajektorien-geführter, augenblickswert-basierter, synchroner Pulsmuster die Pulsmuster unmittelbar abhängig von einem Sollwert des Ständerflusses und dem jeweiligen Istwert, der von dem Ständerfluss-Beobachter (F) ermittelt wird, zu generieren, wobei der zweite Pulsmustergenerator (M) parallel zu dem ersten Pulsmustergenerator (P) geschaltet ist, wobei der Ausgang des Schlupffrequenzreglers (3) auch mit einem Eingang des zweiten Pulsmustergenerators (M) verbunden ist, so dass unabhängig davon, ob die Einrichtung zum Betreiben der Asynchronmaschine (K) die mittelwert-basierten Pulsmuster erzeugt, derselbe Schlupffrequenzregler (3) eingesetzt wird.

2. Einrichtung nach dem vorhergehenden Anspruch, wobei der Ständerflussregler (R) zum Ansteuern des Stromrichters (G) mittels der mittelwert-basierten Pulssignale eine Aussteuerung der Asynchronmaschine (K) als die Stellgröße ausgibt, wobei die Aussteuerung durch ein Verhältnis einer mittleren Ausgangsspannung des Stromrichters (G) zu einer Eingangsspannung, oder der maximal möglichen Ausgangsspannung, des Stromrichters (G) definiert ist, oder eine Sollspannung der Asynchronmaschine (K) als die Stellgröße ausgibt.

3. Einrichtung nach einem der vorhergehenden Ansprüche, wobei die von dem Ständerflussregler (R) erzeugte Stellgröße sowohl beim Betrieb der Asynchronmaschine (K) im Spannungsstellbereich als auch im Feldschwächbereich verwendet wird.

4. Einrichtung nach einem der vorhergehenden Ansprüche, wobei eine durch den Ständerfluss-Beobachter (F) und den zweiten Pulsmustergenerator (M) gebildete Regelung Dead-Beat-Regelverhalten zeigt.

5. Einrichtung nach einem der vorhergehenden Ansprüche, wobei der Schlupffrequenzregler (3) gemeinsam mit dem Ständerflussregler (R) beim Ansteuern des Stromrichters (G) mittels der mittelwert-basierten Pulssignale (erste Betriebsart) die Funktion eines Synchronisierungsreglers im Sinne einer PLL, oder Phase Locked Loop, erfüllt, der die Schaltung von Nullspannungen des Stromrichters (G) mit der Grundfrequenz der Rotation des Ständerfluss-Raumzeiger synchronisiert.

**6.** Einrichtung nach einem der vorhergehenden Ansprüche, wobei die Struktur (1, 2, 3, 4, 5, C, F) beim Betrieb des Stromrichters (G) mit synchronen Pulsungen unabhängig davon, ob mittelwert-basierte oder augenblickswert-basierte Pulssignale erzeugt werden, zusätzlich zu dem Ständerflussregler (R) und dem Schlupffrequenzregler (3) keinen Synchronisationsregler aufweist, der die Schaltung von Nullspannungen des Stromrichters (G) mit der Grundfrequenz der Rotation des Ständerfluss-Raumzeiger synchronisiert.

**7.** Einrichtung nach dem vorhergehenden Anspruch, wobei die Struktur (1, 2, 3, 4, 5, C, F) so ausgestaltet ist, dass zur Ansteuerung des Stromrichters (G) mittels der mittelwert-basierten Pulssignale, in einer ersten Betriebsart, in jedem Arbeitstakt oder Pulsperiode auf Basis eines vorgegebenen Wertes für den Winkel des Ständerfluss-Raumzeiger vom Ständerflussregler (R) die von ihm auszugebende Stellgröße berechnet wird, sodass die nächste zu schaltende Nullspannung bei dem vorgegebenen Winkel geschaltet wird.

**8.** Steuer- und/oder Regelverfahren zum Betreiben einer Asynchronmaschine (K), die von einem 3-Phasen-Stromrichter (G) gespeist wird,
**dadurch gekennzeichnet, dass**

- ein Schlupffrequenzregler (3) verwendet wird, der einen Sollwert (WS_ref, WFs) einer Ständerfrequenz der Asynchronmaschine ausgibt,
- zur Steuerung und/oder Regelung bei Ansteuerung des Stromrichters (G) mittels mittelwert-basierter Pulssignale ein Ständerflussregler (R) mit Dead-Beat-Verhalten verwendet wird, wobei der Ständerflussregler (R) abhängig von einem Sollwert des Ständerflusses der Asynchronmaschine (K) und abhängig von einem Sollwert des Drehmoments der Asynchronmaschine (K) eine Stellgröße ausgibt, unter deren Verwendung von einem nachgeschalteten ersten Pulsmustergenerator (P) die mittelwert-basierten Pulssignale erzeugt werden, wobei der Sollwert (WS_ref, WFs) der Ständerfrequenz für die Erzeugung der Stellgröße verwendet wird, wobei die mittelwert-basierten Pulssignale derart erzeugt werden können, dass Schalthandlungen des 3-Phasen-Stromrichters mit der Grundfrequenz der Rotation des Ständerfluss-Raumzeigers synchronisiert auftreten, und damit synchrone Pulsmuster ergeben, und wobei die mittelwert-basierten Pulssignale derart erzeugt werden können, dass Schalthandlungen des 3-Phasen-Stromrichters asynchron zu der Grundfrequenz der Rotation des Ständerfluss-Raumzeigers sind, und damit asynchrone Pulsmuster ergeben,
- zur Steuerung und/oder Regelung bei Ansteuerung des Stromrichters (G) mittels augenblickswert-basierter, synchroner Pulsmuster ein zweiter Pulsmustergenerator (M) verwendet wird, der den Sollwert (WS_ref, WFs) der Ständerfrequenz von dem Schlupffrequenzregler (3) empfängt, wobei der zweite Pulsmustergenerator (M) parallel zu dem ersten Pulsmustergenerator (P) geschaltet ist.

**9.** Verfahren nach dem vorhergehenden Anspruch, wobei der Ständerflussregler (R) zum Ansteuern des Stromrichters (G) mittels der mittelwert-basierten Pulssignale eine Aussteuerung der Asynchronmaschine (K) als Stellgröße ausgibt, wobei die Aussteuerung durch ein Verhältnis einer mittleren Ausgangsspannung des Stromrichters (G) zu einer Eingangsspannung, oder der maximal möglichen Ausgangsspannung, des Stromrichters (G) definiert ist, oder eine Sollspannung der Asynchronmaschine (K) als Stellgröße ausgibt.

**10.** Verfahren nach einem der vorhergehenden Ansprüche, wobei eine von dem Ständerflussregler (R) geregelte Größe als Stellgröße sowohl beim Betrieb der Asynchronmaschine (K) im Spannungsstellbereich als auch im Feldschwächbereich verwendet wird.

**11.** Verfahren nach einem der vorhergehenden Ansprüche, wobei der Schlupffrequenzregler (3) gemeinsam mit dem Ständerflussregler (R) beim Ansteuern des Stromrichters (G) mittels der mittelwert-basierten Pulssignale (erste Betriebsart) die Funktion eines Synchronisierungsreglers im Sinne einer PLL, oder Phase Locked Loop, erfüllt, der die Schaltung von Nullspannungen des Stromrichters (G) mit der Grundfrequenz der Rotation des Ständerfluss-Raumzeiger synchronisiert.

**12.** Verfahren nach einem der vorhergehenden Ansprüche, wobei beim Betrieb des Stromrichters (G) mit synchronen Pulsungen unabhängig davon, ob mittelwert-basierte oder augenblickswert-basierte Pulssignale erzeugt werden, zusätzlich zu dem Ständerflussregler (R) und dem Schlupffrequenzregler (3) kein Synchronisationsregler verwendet wird, der die Schaltung von Nullspannungen des Stromrichters (G) mit der Grundfrequenz der Rotation des Ständerfluss-Raumzeiger synchronisiert.

13. Verfahren nach einem der vorhergehenden Ansprüche, wobei dem Ständerflussregler (R) ein Wert des Winkels des Ständerfluss-Raumzeigers als Eingangsgröße zugeführt wird und wobei der Ständerflussregler (R) eine von ihm auszugebende Stellgröße so berechnet, dass die nächste zu schaltende Nullspannung bei dem Winkel geschaltet wird.

14. Computerprogramm mit Programmcode zur Durchführung des Verfahrens nach einem der vorhergehenden Ansprüche, wenn das Computerprogramm auf einem Computer abläuft.

15. Datenträger, wobei auf dem Datenträger eine Datenstruktur gespeichert ist, die ausgestaltet ist, einen Computer dazu zu veranlassen, das Verfahren nach einem der vorhergehenden Ansprüche auszuführen, wenn der Computer auf die Datenstruktur zugreift.

**Claims**

1. Open-loop and/or closed-loop control device for operation of a asynchronous machine (K), which is fed from a three-phase converter (G),
   **characterized by**
   an open-loop and/or closed-loop control structure, referred to for short as the structure, (1, 2, 3, 4, 5, C, F), which

   - has a slip frequency regulator (3) with an output at which the slip frequency regulator (3) emits a nominal value (WS_ref, WFs) of a stator frequency of the asynchronous machine,
   - a stator flux regulator (R) and a first pulse pattern generator (P) for producing mean- value- based pulsed signals, wherein

      a) the structure can be used such that the first pulse pattern generator produces the mean-value-based pulsed signals such that the switching operations of the three-phase converter (G) occur synchronized at the fundamental frequency of the rotation of the stator flux space vector thus resulting in synchronous pulse patterns, and
      b) the structure can be used such that the first pulse pattern generator produces the mean-value-based pulsed signals such that switching operations of the three-phase converter (G) are asynchronous with respect to the fundamental frequency of the rotation of the stator flux space vector, and therefore asynchronous pulse patterns result,

   wherein one output of the stator flux regulator (R) is connected to one input of the pulse pattern generator (P) such that the pulse pattern generator (P) can produce the pulsed signals as a function of a manipulated variable which is produced by the stator flux regulator (R), wherein the stator flux regulator (R) is designed to produce the manipulated variable as a function of a nominal value of the stator flux of the asynchronous machine (K) and as a function of a nominal value of the torque of the asynchronous machine (K),
   wherein the stator flux regulator (R) has a dead-beat control response and
   wherein the output of the slip frequency regulator (3) is connected to one input of the stator flux regulator (R) such that the nominal value (WS_ref, WFs) of the stator frequency is used for the production of the manipulated variable,

      - a second pulse pattern generator (M), which is connected to one output of a stator flux monitor (F) in order to generate the pulse patterns directly as a function of a nominal value of the stator flux and the respective actual value which is determined by the stator flux monitor (F), during operation of the asynchronous machine, by means of synchronous pulse patterns which are passed over stator flux trajectories and are based on instantaneous values,

   wherein the second pulse pattern generator (M) is connected in parallel with the first pulse pattern generator (P), wherein the output of the slip frequency regulator (3) is also connected to one input of the second pulse pattern generator (M) such that the same slip frequency regulator (3) is used irrespective of whether the device for operation of the asynchronous machine (K) produces the mean-value-based pulse pattern.

2. Device according to the preceding claim, wherein the stator flux regulator (R) emits a control level of the asynchronous machine (K) as the manipulated variable in order to control the converter (G) by means of the mean-value-based pulsed signals, wherein the control level is defined by a ratio of a mean output voltage of the converter (G) to an input voltage or the maximum possible output voltage of the converter (G), or emits a nominal voltage of the asynchronous machine (K) as the manipulated variable.

3. Device according to one of the preceding claims, wherein the manipulated variable which is produced by the stator flux regulator (R) is used for operation of the asynchronous machine (K) both in the voltage control range and in the field weakening range.

4. Device according to one of the preceding claims, wherein a closed control loop formed by the stator flux monitor (F) and the second pulse pattern generator (M) has a dead-beat control response.

5. Device according to one of the preceding claims, wherein the slip frequency regulator (3) together with the stator flux regulator (R) carries out the function of a synchronization regulator in the sense of a phase locked loop or PLL when the converter (G) is being controlled by means of the mean-value-based pulsed signals (first operating mode), which synchronization regulator synchronizes the switching of zero voltages of the converter (G) to the fundamental frequency of the rotation of the stator flux space vector.

6. Device according to one of the preceding claims, wherein the structure (1, 2, 3, 4, 5, C, F) does not have any synchronization regulator in addition to the stator flux regulator (R) and the slip frequency regulator (3) during operation of the converter (G) with synchronous pulses, irrespective of whether pulsed signals which are based on mean values or instantaneous values are produced, which synchronization regulator would synchronize the switching of zero voltages of the converter (G) at the fundamental frequency of the rotation of the stator flux space vector.

7. Device according to the preceding claim, wherein the structure (1, 2, 3, 4, 5, C, F) is designed such that the manipulated variable to be emitted from the stator flux regulator (R) is calculated by the stator flux regulator (R) on the basis of a predetermined value for the angle of the stator flux space vector in each operating cycle or pulse period, in order to control the converter (G) by means of the mean-value-based pulsed signals in a first operating mode, such that the next zero voltage to be switched is switched at the predetermined angle.

8. Open-loop and/or closed-loop control method for operation of an asynchronous machine (K), which is fed from a three-phase converter (G),
   **characterized in that**

   - a slip frequency regulator (3) is used which emits a nominal value (WS_ref, WFs) of a stator frequency of the asynchronous machine,
   - a stator flux regulator (R) with a dead-beat response is used for open-loop and/or closed-loop control, for control of the converter (G) by means of mean-value-based pulsed signals, wherein the stator flux regulator (R) emits a manipulated variable as a function of a nominal value of the stator flux of the asynchronous machine (K) and as a function of a nominal value of the torque of the asynchronous machine (K), which manipulated variable is used by a downstream first pulse pattern generator (P) to produce mean-value-based pulsed signals, wherein the nominal value (WS_ref, WFs) of the stator frequency is used for producing the manipulated variable,

   wherein the mean-value-based pulsed signals can be produced such that switching operations of the three-phase converter occur synchronized to the fundamental frequency of the rotation of the stator flux space vector, thus resulting in synchronous pulse patterns, and wherein the mean-value-based pulsed signals can be produced such that switching operations of the three-phase converter are asynchronous with respect to the fundamental frequency of the rotation of the stator flux space vector, and therefore result in asynchronous pulse patterns,

   - a second pulse pattern generator (M) is used for open-loop and/or closed-loop control for controlling the converter (G) by means of synchronous pulse patterns which are based on instantaneous values, which second pulse pattern generator (M) receives the nominal value (WS_ref, WFs) of the stator frequency from the slip frequency regulator (3), wherein the second pulse pattern generator (M) is connected in parallel with the first pulse pattern generator (P).

9. Method according to the preceding claim, wherein the stator flux regulator (R) emits a control level of the asynchronous machine (K) as the manipulated variable in order to control the converter (G) by means of the mean-value-based pulsed signals, wherein the control level is defined by a ratio of a mean output voltage of the converter (G) to an input voltage or the maximum possible output voltage of the converter (G), or emits a nominal voltage of the asynchronous machine (K) as the manipulated variable.

10. Method according to one of the preceding claims, wherein a variable which is regulated by the stator flux regulator (R) is used as the manipulated variable for operation of the asynchronous machine (K) both in the voltage control range and in the field weakening range.

11. Method according to one of the preceding claims, wherein the slip frequency regulator (3) together with the stator flux regulator (R) carries out the function of a synchronization regulator in the sense of a phase locked loop or PLL when the converter (G) is being controlled by means of the mean-value-based pulsed signals (first operating mode), which synchronization regulator synchronizes the switching of zero voltages of the converter (G) to the fundamental frequency of the rotation of the stator flux space vector.

12. Method according to one of the preceding claims, wherein no synchronization regulator which would synchronize the switching of zero voltages of the converter (G) to the fundamental frequency of the rotation of the stator flux space vector is used in addition to the stator flux regulator (R) and the slip frequency regulator (3) during operation of the converter (G) with synchronous pulses, irrespective of whether pulsed signals which are based on mean values or instantaneous values are produced.

13. Method according to one of the preceding claims, wherein a value of the angle of the stator flux space vector is supplied as an input variable to the stator flux regulator (R), and wherein the stator flux regulator (R) calculates a manipulated variable to be emitted from it such that the next zero voltage to be switched is switched at that angle.

14. Computer program with program code for carrying out the method according to one of the preceding claims when the computer program is run on a computer.

15. Data storage medium, wherein a data structure is stored on the data storage medium which is designed to allow a computer to carry out the method according to one of the preceding claims when the computer accesses the data structure.

**Revendications**

1. Dispositif de commande et/ou de régulation pour le fonctionnement d'une machine asynchrone (K) qui est alimentée par un convertisseur triphasé (G),
   **caractérisé par**
   une structure de commande et/ou de régulation ou désignée brièvement par la structure (1, 2, 3, 4, 5, C, F) qui

   - présente un régulateur de fréquence de glissement (3) avec une sortie, sur laquelle le régulateur de fréquence de glissement (3) émet une valeur de consigne ($W_{s\_ref}$, $W_{Fs}$) d'une fréquence de stator de la machine asynchrone,
   - un régulateur de flux de stator (R) et un premier générateur de modèle d'impulsion (P) pour la génération de signaux d'impulsion basés sur des valeurs moyennes,

     a) la structure pouvant être utilisée de sorte que le première générateur de modèle d'impulsion génère les signaux d'impulsion basés sur des valeurs moyennes de telle sorte que des actions de commutation du convertisseur triphasé (G) apparaissent synchronisées avec la fréquence de base de la rotation du vecteur spatial du flux de stator et produisent ainsi des modèles d'impulsion synchrones, et
     b) la structure pouvant être utilisée de sorte que le premier générateur de modèle d'impulsion génère les signaux d'impulsion basés sur des valeurs moyennes de telle sorte que des actions de commutation du convertisseur triphasé (G) soient asynchrones par rapport à la fréquence de base de la rotation du vecteur spatial du flux de stator et produisent ainsi des modèles d'impulsion asynchrones,

   une sortie du régulateur de flux de stator (R) étant reliée à une entrée du générateur de modèle d'impulsion (P) de sorte que le générateur de modèle d'impulsion (P) puisse générer les signaux d'impulsion selon une grandeur de réglage qui est générée par le régulateur de flux de stator (R), le régulateur de flux de stator (R) étant configuré afin de générer la grandeur de réglage selon une valeur de consigne du flux de stator de la machine asynchrone (K) et selon une valeur de consigne du couple de la machine asynchrone (K), le régulateur de flux de stator (R) présentant un comportement de régulation Dead-Beat et la sortie du régulateur de fréquence de glissement (3) étant reliée à une entrée du régulateur du flux de stator (R) de sorte que la valeur de consigne ($W_{s\_ref}$, $W_{FS}$) de la fréquence de stator intervienne pour la génération de la grandeur de réglage,

- un second générateur de modèle d'impulsion (M) qui est relié à une sortie d'un observateur de flux de stator (F) afin de générer lors du fonctionnement de la machine asynchrone au moyen de modèles d'impulsion synchrones, basés sur des valeurs instantanées, guidés par des trajectoires de flux de stator, les modèles d'impulsion directement selon une valeur de consigne du flux de stator et la valeur réelle respective qui est déterminée par l'observateur de flux de stator (F), le second générateur de modèle d'impulsion (M) étant monté en parallèle du premier générateur de modèle d'impulsion (P), la sortie du régulateur de fréquence de glissement (3) étant reliée aussi à une entrée du second générateur de modèle d'impulsion (M) de sorte qu'indépendamment de si le dispositif pour le fonctionnement de la machine asynchrone (K) génère le modèle d'impulsion basé sur des valeurs moyennes, le même régulateur de fréquence de glissement (3) est utilisé.

2. Dispositif selon la revendication précédente, dans lequel le régulateur de flux de stator (R) émet un réglage de la machine asynchrone (K) comme grandeur de réglage pour la commande du convertisseur (G) au moyen des signaux d'impulsion basés sur des valeurs moyennes, le réglage étant défini par un rapport entre une tension de sortie moyenne du convertisseur (G) et une tension d'entrée ou la tension de sortie possible au maximum du convertisseur (G), ou émettant une tension de consigne de la machine asynchrone (K) comme grandeur de réglage.

3. Dispositif selon l'une quelconque des revendications précédentes, dans lequel la grandeur de réglage générée par le régulateur de flux de stator (K) est utilisée lors du fonctionnement de la machine asynchrone (K) dans la plage de réglage de la tension ainsi que dans la plage d'affaiblissement de champ.

4. Dispositif selon l'une quelconque des revendications précédentes, dans lequel une régulation formée par l'observateur de flux de stator (F) et le second générateur de modèle d'impulsion (M) montre un comportement de régulation Dead-Beat.

5. Dispositif selon l'une quelconque des revendications précédentes, dans lequel le régulateur de fréquence de glissement (3) conjointement avec le régulateur de flux de stator (R) lors de la commande du convertisseur (G) au moyen des signaux d'impulsion basés sur des valeurs moyennes (premier type de fonctionnement) remplit la fonction d'un régulateur de synchronisation au sens d'un PLL ou Phase Locked Loop qui synchronise le circuit de tensions nulles du convertisseur (G) avec la fréquence de base de la rotation du vecteur spatial de flux de stator.

6. Dispositif selon l'une quelconque des revendications précédentes, dans lequel la structure (1, 2, 3, 4, 5, C, F) ne présente lors du fonctionnement du convertisseur (G) avec des impulsions synchrones indépendamment de si des signaux d'impulsion basés sur des valeurs moyennes ou sur des valeurs instantanées sont générés, outre le régulateur de flux de stator (R) et le régulateur de fréquence de glissement (3) aucun régulateur de synchronisation qui synchronise le circuit de tensions nulles du convertisseur (G) avec la fréquence de base de la rotation du vecteur spatial de flux de stator.

7. Dispositif selon la revendication précédente, dans lequel la structure (1, 2, 3, 4, 5, C, F) est configurée de sorte que la grandeur de réglage à émettre par celui-ci soit calculée pour la commande du convertisseur (G) au moyen des signaux d'impulsion basés sur des valeurs moyennes dans un premier type de fonctionnement dans chaque cadence de travail ou période d'impulsion sur la base d'une valeur prescrite pour l'angle du vecteur spatial de flux de stator par le régulateur de flux stator (R), de sorte que la prochaine tension nulle à commuter soit commutée pour l'angle prescrit.

8. Procédé de commande et/ou de régulation pour le fonctionnement d'une machine asynchrone (K) qui est alimentée par un convertisseur triphasé (G),
**caractérisé en ce que**

- un régulateur de fréquence de glissement (3) est utilisé, lequel émet une valeur de consigne ($W_{s\_réf}$, $W_{FS}$) d'une fréquence de stator de la machine asynchrone,
- pour la commande et/ou la régulation lors de la commande du convertisseur (G) au moyen de signaux d'impulsion basés sur des valeurs moyennes, un régulateur de flux de stator (R) avec un comportement Dead-Beat est utilisé, le régulateur de flux de stator (R) émettant selon une valeur de consigne du flux de stator de la machine asynchrone (K) et selon une valeur de consigne du couple de la machine asynchrone (K) une grandeur de réglage, dont l'utilisation par un premier générateur de modèle d'impulsion (P) monté en aval, génère les signaux d'impulsion basés sur des valeurs moyennes, la valeur de consigne (($W_{s\_ref}$, $W_{FS}$) de la fréquence de stator étant utilisée pour la génération de la grandeur de réglage, les signaux d'impulsion basés sur des valeurs moyennes pouvant être générés de telle sorte que des actions de commutation du convertisseur triphasé apparaissent synchronisées avec la fréquence de base de la rotation du vecteur spatial de flux de stator, et produisent ainsi des modèles d'impulsion synchrones, et les signaux d'impulsion basés sur des valeurs moyennes pouvant être générés de telle sorte que des actions de commutation du convertisseur triphasé soient asynchrones par rapport à la fréquence de base de la rotation du vecteur spatial de flux de stator et ainsi produisent des modèles d'impulsion asynchrones,
- pour la commande et/ou la régulation lors de la commande du convertisseur (G) au moyen de modèles d'impulsion synchrones, basés sur des valeurs instantanées, un second générateur de modèle d'impulsion (M) est utilisé, lequel reçoit la valeur de consigne ($W_{s\_ref}$, $W_{FS}$) de la fréquence de stator du régulateur de fréquence de glissement (3), le second générateur de modèle d'impulsion (M) étant monté en parallèle du premier générateur de modèle d'impulsion (P).

**9.** Procédé selon la revendication précédente, dans lequel le régulateur de flux de stator (R) émet un réglage de la machine asynchrone (K) comme grandeur de réglage pour la commande du convertisseur (G) au moyen des signaux d'impulsion basés sur des valeurs moyennes, le réglage étant défini par un rapport entre une tension de sortie moyenne du convertisseur (G) et une tension d'entrée ou la tension de sortie possible au maximum du convertisseur (G) ou émet une tension de consigne de la machine asynchrone (K) comme grandeur de réglage.

**10.** Procédé selon l'une quelconque des revendications précédentes, dans lequel une grandeur régulée par le régulateur de flux de stator (R) est utilisée comme grandeur de réglage lors du fonctionnement de la machine asynchrone (K) dans la plage de réglage de la tension ainsi que dans la plage d'affaiblissement de champ.

**11.** Procédé selon l'une quelconque des revendications précédentes, dans lequel le régulateur de fréquence de glissement (3) conjointement avec le régulateur de flux de stator (R) lors de la commande du convertisseur (G) au moyen des signaux d'impulsion basés sur des valeurs moyennes (premier type de fonctionnement), remplit la fonction d'un régulateur de synchronisation au sens d'un PLL ou Phase Locked Loop qui synchronise le circuit de tensions nulles du convertisseur (G) avec la fréquence de base de la rotation du vecteur spatial de flux de stator.

**12.** Procédé selon l'une quelconque des revendications précédentes, dans lequel lors du fonctionnement du convertisseur (G) avec des impulsions synchrones indépendamment de si des signaux d'impulsion basés sur des valeurs moyennes ou valeurs instantanées sont générés, outre le régulateur de flux de stator (R) et le régulateur de fréquence de glissement (3) aucun régulateur de synchronisation n'est utilisé, lequel régulateur synchronise le circuit de tensions nulles du convertisseur (G) avec la fréquence de base de la rotation du vecteur spatial de flux de stator.

**13.** Procédé selon l'une quelconque des revendications précédentes, dans lequel une valeur de l'angle du vecteur spatial de flux de stator est transmise comme grandeur d'entrée au régulateur de flux de stator (R), et dans lequel le régulateur de flux de stator (R) calcule une grandeur de réglage à émettre par celui-ci de sorte que la prochaine tension nulle à commuter soit commutée pour l'angle.

**14.** Programme informatique avec un code de programmation pour la mise en oeuvre du procédé selon l'une quelconque des revendications précédentes, si le programme informatique se déroule sur un ordinateur.

**15.** Support de données, dans lequel une structure de données est enregistrée sur le support de données, laquelle est configurée afin d'ordonner à un ordinateur de réaliser le procédé selon l'une quelconque des revendications précédentes, si l'ordinateur a accès à la structure de données.

Fig.1

$T_{sample}$

$z_a; z_b; z_c$

$\underline{U}_S$

$\underline{\Psi}_S$

$\underline{U}_S$

$\underline{\Psi}_S$

$C$\_CvOpSo

$m_{ref} \; p_p\omega_{mech}$

$\Psi_{S\_ref} \; sign(\omega_{mech})$

$\gamma \cdot \Psi_{S\_ref}$

$U_{mq\_max}$

$|^o_{ref}|$

$|^o_{ref}|_f$

$\omega_{s\_ref}$

$t_{ON}$

$t_{OFF}$

$t_{INT0}$

$B\_EnSw$

$C$

$F$

$p_p\omega_{mech}$

$\underline{i}_S$

$\dfrac{1}{|\underline{\Psi}'_R|^2}$

$m$

$\omega_{s\_ref}$

$U_{DC}$

$i_a; i_b; i_c$

$i_{ph1}; i_{ph2}$

$U_{DC}$

$\underline{i}_S$

$U_{DC}$

$g\underline{\Psi}_R \quad g\underline{\Psi}_S \quad e\underline{i}_S$

$U_{DC\_f1}$

$U_{DC\_f2}$

$m_f$

SFO

$\underline{i}_{S\_f1}$

$U_{DC\_f3}$

$U_{DC\_f4}$

RFO
$\underline{i}_{S\_f1}$

RFO
$e\underline{i}_{S\_f1}$

$\underline{i}_{S\_f1}$

$T_{sample}$

$T_{sample}$

$U_{DC\_f3}$

$\underline{i}_{S\_f1}$

$i_a; i_b; i_c$

$T_{sample}$

$i_a; i_b; i_c$

1

2

3

4

5

Fig.2

| Name | VSI Ausgangsspannung | Ständerfluss-Trajektorie | Null-Spannungen pro Periode |
|---|---|---|---|
| EP3 | | | 0 |
| EP5 | | | 6 |
| EP7 | | | 12 |
| EP9 | | | 18 |

Fig.3

| Name | VSI Ausgangsspannung | Ständerfluss-Trajektorie | Null-Spannungen pro Periode |
|---|---|---|---|
| SP1 | | | 0 |
| CP3 | | | 6 |
| CP5 | | | 12 |
| CP7 | | | 18 |

Fig.4

| Name | VSI Ausgangsspannung | Ständerfluss–Trajektorie | Null-Spannungen pro Periode |
|---|---|---|---|
| PWM–S15 | | | 30 |
| PWM–S9 | | | 18 |

Fig.5

EP 2 087 585 B1

Fig.6

Fig.7

Fig.8

$$\underline{q}_{s,ref} = \frac{1}{U_{DC\_f1}} \cdot \left[ \frac{1}{T_p} \left[ \gamma \underline{\Psi}_{S\_ref} \cdot e^{j\varphi_s} e^{j\Delta \chi_S} - \underline{\Psi}_s \right] + R_S \cdot \underline{i}_S \right]$$

**Fig. 9**

Fig.10

Fig.11

Fig.12

Fig.13

EP 2 087 585 B1

Fig.14

Fig.15

Fig.16

Fig.17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2005018086 A1
- EP 0945970 A2
- EP 0945970 A
- EP 0945956 A
- WO 2005018086 A
- DE 4110225

### In der Beschreibung aufgeführte Nicht-Patentliteratur

- **Stanke, G. ; Horstmann, D.** Die stromrichtemahe Antriebsregelung des Steuergerätes für Bahnautomatisierungssysteme SIBAS32. *eb-Elektrische Bahnen,* 1992, vol. 90, 344-350
- **Depenbrock, M.** Direkte Selbstregelung (DSR) für hochdynamische Drehfeldantriebe mit Stromrichterspeisung. *etzArchiv,* 1985, vol. 7, 211-218
- **Jänecke, M. ; Kremer, R. ; Steuerwald, G.** Direkte Selbstregelung, ein neuartiges Regelverfahren für Traktionsantriebe im Ersteinsatz bei dieselelektrischen Lokomotiven. *eb-Elektrische Bahnen,* 1991, vol. 89, 79-87
- Direkte Drehmomentregelung von Drehstromantrieben. *ABB Technik,* 1995, 19-24
- **Amler, G. ; Hoffmann, F. ; Stanke, G. ; Sperr, F. ; Weidauer, M.** Highly dynamic and speed sensorless control of traction drives. *Proc. EPE Conference 2003,* 2003
- **Evers, C. ; Hoffmann, F. ; Steimel, A. ; Wörner, K.** Flux-guided control strategy for pulse pattern changes without transients of torque and current for high power IGBT-inverter drives. *Proc. EPE Conference 2001,* 2001
- **Wömer, K.** Quasi-synchrone statorflussgeführte Pulsverfahren für die wechselrichtergespeiste Induktionsmaschine. *Dissertation 2001, VDI-Fortschrittsberichte,* 2001
- **Griva, G. ; Profumo, F. ; Abrate, M ; Tenconi, A. ; Berruti, D.** Wide speed range DTC drive performance with new flux weakening control. *Power Electronics Specialists Conference,* 17. Mai 1998, vol. 2, 1599-1604
- **Tripathi, A. ; Khambadkone, A. M. ; Panda, S. K.** Dynamic torque control performance of the Direct Flux Control scheme in field weakening range. *29th annual conference of the IEEE Industrial Electronics Society,* 02. September 2003, vol. 1, 220-225
- **Joong-Hui Lee ; Chang-Gyun Kim ; Myung-Joong Youn.** A dead-beat type digital controller for the direct torque control of an induction motor. *IEEE Transactions on Power Electronics,* September 2002, vol. 17 (5), 739-746